# EUROPÄISCHE PATENTSCHRIFT

(11) **EP 3 142 863 B1**
(45) Veröffentlichungstag und Bekanntmachung des Hinweises auf die Patenterteilung: **17.02.2021**
(21) Anmeldenummer: 15722216.7
(22) Anmeldetag: 13.05.2015
(51) Int. Cl.: B42D 25/369, B42D 25/41

(54) **DATENTRÄGER MIT PERSONALISIERBAREM ECHTHEITSMERKMAL**
DATA CARRIER WITH PERSONALISED AUTHENTICITY FEATURE
SUPPORT DE DONNÉES AYANT UNE CARACTÉRISTIQUE D'AUTHENTICITÉ PERSONNALISABLE

(30) Priorität: 16.05.2014 EP 14168698; 16.02.2015 EP 15155247
(43) Veröffentlichungstag der Anmeldung: 22.03.2017
(73) Patentinhaber: U-NICA Systems AG, 7302 Landquart (CH)
(72) Erfinder: FRANKEN, Klaus, CH-7206 Igis (CH)
(74) Vertreter: Liebetanz, Michael
(86) Internationale Anmeldenummer: PCT/EP2015/060703
(87) Internationale Veröffentlichungsnummer: WO 2015/173364

(56) Entgegenhaltungen:
- EP-B1- 1 322 478
- WO-A2-2009/074284
- DE-A1-102011 116 490
- DE-A1-102011 116 491

## Beschreibung

### TECHNISCHES GEBIET

Die vorliegende Erfindung betrifft einen Datenträger, insbesondere eine Kunststoffkarte, mit in dem Datenträger vorgesehenen magnetisierenden Echtheitsmerkmalen, die bei Bestrahlung mit einem energiereichen Strahl, z.B. einem Laserstrahl oder einem Elektronen- oder Neutronenstrahl, durch Veränderung von physikalischen und/oder chemischen Eigenschaften personalisierbar sind.

### STAND DER TECHNIK

Datenträger in Form von Ausweiskarten, Personalisierungsseiten bzw. -inlays für-Pässe oder auch Kreditkarten und ähnliche Kunststoffkarten müssen heute eine hohe Fälschungssicherheit aufweisen. Es gibt eine Vielzahl von unterschiedlichsten Sicherheitsmerkmalen sowie speziellen Druckverfahren, welche eine derartige Fälschungssicherheit in einem gewissen Umfang gewährleisten können. Eine große Herausforderung ist es dabei, nicht nur nicht individualisierte Sicherheitsmerkmale bereitzustellen, sondern insbesondere Sicherheitsmerkmale, welche gewissermassen mit der Personalisierung kombiniert sind respektive Teil davon sind, also individualisierbar sind. Die leichte Verfügbarkeit von Laseranlagen und ihre ausgedehnten Anwendungsgebiete im Rahmen der Dokumentsicherheit legen deren Anwendung für ein sicheres Personalisierungsverfahren nahe. Die im Gebrauch vorhandene Lasertechnologie wird in der Praxis ausschliesslich für die Erzeugung von Bildern wie etwa Portraits und grafischen Symbolen, Schriften und dergleichen eingesetzt.

Aus der DE 2907004 A ist z.B. bekannt, dass Bilder in Ausweiskarten, aber natürlich auch andere visuell erkennbare Informationen wie Zeichen, Muster etc., mit einem Laserstrahl erzeugt werden können. In dieser Schrift besteht die Funktionsschicht, aus der im Verlauf des Verfahrens das endgültige Bild oder ein beliebiges sichtbares Symbol oder Zeichen erzeugt wird, aus einer thermosensitiven Schicht. Diese Funktionsschicht erstreckt sich über die Karte auf einem Flächensegment, auf dem sich später das Bild oder eine andere visuell erkennbare Information befinden soll. Die Funktionsschicht befindet sich üblicherweise im Verbund mit anderen Kunststoffschichten, aus denen im Verlauf der Kartenherstellung die fertige Karte als Folienlaminat erzeugt wird. Das Bild wird in diesem Fall eingebrannt, wobei mit der Intensität des Laserstrahls eine Verdunkelung der bestrahlten Stelle einhergeht. Auf diese Weise werden heute routinemässig schwarz-weisse Bilder bzw. Graustufenbilder erzeugt. Der bereits früh erkannte Vorteil dieses Verfahren, auch als Laser-Engravings bezeichnet, besteht in der hohen Fälschungssicherheit und Beständigkeit gegen Licht und mechanischer Beanspruchung von auf diese Weise hergestellten Karten, insbesondere dann, wenn sie aus Polycarbonat bestehen.

Dies ist zum Beispiel durch die EP 1574359 A oder die EP 1008459 A belegt. Sicherheitsdokumente hergestellt mit Hilfe von Laser-Engraving auf Polycarbonatlaminaten erfüllen internationale Vorgaben für Reisedokumente (ICAO Doc. 9303 Part III Volume I) oder übertreffen diese sogar. Für eine farbige Darstellung werden mittlerweile auch Systeme bestehend aus Lasern mit drei unterschiedlichen Wellenlängen eingesetzt. Voraussetzung ist eine Funktionsschicht im Datenträger, die aus einer Formulierung mit farbgebenden Komponenten besteht. Die farbgebenden Komponenten verschiedener Farbe müssen zusammen einen Farbraum ergeben, der aus mehreren, typischerweise wenigstens drei, Grundfarben besteht. Aus praktischen Gründen werden die Grundfarben Cyan [C], Magenta [M] und Gelb [Y] bevorzugt. Es sind jedoch auch andere Farben denkbar. Die Grundfarben müssen ausserdem ein Absorptionsspektrum aufweisen, das eine Wechselwirkung mit farbigem Laserlicht erlaubt. Im Gegensatz zum vorgenannten Verfahren der Verkohlung von zunächst nicht sichtbaren Komponenten zeigt dieses Verfahren die Farbgebung durch ein Bleichen, also ein Aufhellen, einer vor der Bestrahlung sichtbaren Farbe. Das Substrat erscheint durch die sichtbare Mischung der farbigen Komponenten vor der Bestrahlung in einem sehr dunklen, idealerweise schwarzen Ton. Ein solches Verfahren beschreibt zum Beispiel die WO 01/15910 A. Die Vorteile der weiter erhöhten Fälschungssicherheit durch eine farbliche Darstellung des Dokumenteninhabers werden bei dem in diesem Dokument beschriebenen Verfahren und den dadurch hergestellten Produkten werden durch Nachteile aufgewogen, die seinen praktischen Wert einschränken. Die Autoren beschreiben wie mit einer Laserstrahlung bestimmter Wellenlänge Farbkörper, Farbstoffe oder Pigmente mit bestimmtem Absorptionsspektrum dergestalt gebleicht werden, dass die komplementären Farben bestehen bleiben. Das Verfahren ist mithin technisch sehr aufwendig und zielt im Wesentlichen wie das schwarz-weiss Bilder erzeugende Laser-Engraving auf eine fälschungssichere Darstellung von fotografischen Bildern ab.

Ein anderes Laser-Verfahren, das fälschungssichere Farbbilder über den Weg der Desaktivierung von lichtsensitiven Farbstoffen erzeugen vermag, wird in der WO 2012/062505 A vorgeschlagen. Es zeichnet sich durch die pigmentweise Wirkung eines einzigen energiereichen Lasers aus, der die Pigmentschicht mit mikroskopischer Präzision jedes einzelne Pigmentkorn ausbleicht, nachdem dessen Position in einem vorherigen Verfahren fotometrisch ermittelt und auf dieser Basis eine Pigmentkarte angelegt wurde.

Wiederum ein anderer Ansatz (US 7,793,846 B) wird mit Lasersystemen verfolgt, die im NIR arbeiten. In diesem Fall werden die Partikel mit den Farbkörpern in innigen Kontakt mit IR-Strahlung absorbierenden Substanzen gebracht, die sich ihrerseits durch die Absorption mit spezifischer Laserstrahlung aufheizen und die benachbarten Farbkörper thermisch zur Farbänderung veranlassen.

Die DE 10 2011 116 491 A1 offenbart einen Datenträger mit einem Mikrokapseln aufweisenden Sicherheitselement. Die Mikrokapsel umfasst eine Kapselhülle mit einem lichtdurchlässigen Trägermedium und eine Vielzahl von magnetischen, lichtundurchlässigen Pigmenten. Die Lichtdurchlässigkeit der Mikrokapsel ist durch Anlegen eines Magnetfeldes reversibel intensivierbar, da das Magnetfeld die magnetischen Pigmente derart ausrichtet, dass die Mikrokapsel bei der Betrachtung im Auflicht in der Farbe des Substratuntergrundes erscheint, und da in Abwesenheit des Magnetfelds sich die magnetischen Pigmente innerhalb der Mikrokapsel wieder derart statistisch verteilen, dass ein Betrachter die Mikrokapseln in der Eigenfarbe des magnetischen Pigments wahrnimmt. Die Kapselhülle kann mittels elektromagnetischer Strahlung beschädigt werden, wodurch die Trägerflüssigkeit aus den Mikrokapseln austritt und die Pigmente unbeweglich in den beschädigten Kapselhüllen zurückbleiben. Dadurch werden die Mikrokapseln irreversibel in einem lichtundurchlässigen Zustand fixiert.

Ein Verfahren zur Herstellung eines optisch variablen Sicherheitselements mit einer mikrokapselbasierten Farbschicht mit einem Motivbereich ist in der DE 10 2011 116 490 offenbart. Dabei wird eine Druckfarbe bereitgestellt, die eine Vielzahl von Mikrokapseln enthält, in deren Kapselhülle eine Trägerflüssigkeit und ein magnetisch reversibel ausrichtbares Pigment eingeschlossen sind. In einem den Motivbereich enthaltenden Teilbereich der Farbschicht wird ein externes Magnetfeld angelegt, um dort die drehbaren Pigmente in den Mikrokapseln auszurichten. Die Kapselhüllen im Motivbereich werden durch elektromagnetische Strahlung beschädigt, so dass die Trägerflüssigkeit aus den Mikrokapseln austritt und die Pigmente unbeweglich in den beschädigten Kapselhüllen zurückbleiben und somit das Motiv des Sicherheitselements darstellen.

Allen vorgenannten Verfahren liegt die Motivation zugrunde, ein sichtbares Sicherheitsmerkmal zu erzeugen. Auf dem technischen Gebiet der Dokumentsicherheit definiert man jedoch mehrere Sicherheitsebenen, von denen die sichtbaren und andere von menschlichen Sinnen erfassbaren Merkmale als Erststufen (auch First-Level-Merkmale genannt) nur eine von drei Sicherheitsebenen darstellen. Die zweite Sicherheitsstufe subsummiert Merkmale, die mit einfachen technischen Mitteln, d. h. mit kleineren, portablen Geräten nachweisbar sind. Im einfachsten Fall können das eine UV-Lampe oder ein Laserpointer sein. Die Drittstufenmerkmale sind komplexerer Natur und sind mit forensischen Mitteln verifizierbar. Die verschiedenen Sicherheitsebenen dienen zur Abrundung der gesamten Dokumentensicherheit.

Um diesem Bedürfnis Rechnung zu tragen, schlägt die EP 1 322 478 B1 die Erzeugung eines im UV-Licht erkennbaren Merkmals vor das, basierend auf dem Laser-induzierten Bleichprozess, sich dem Betrachter als dunkle Ausschnitte auf einem fluoreszierenden Flächenelement zeigt. Das Laserlicht oder eine andere energiereich Strahlung wie z. b. ein Elektronenstrahl deaktiviert demnach ein lumineszierendes Echtheitsmerkmal an ausgewählten Stellen. Der sichtbare Bildeindruck entspricht dem eines Negativbildes oder einer Negativschrift. Dieses Merkmal erlaubt die Authentifizierung eines Sicherheitsdokumentes mit einfachen Mitteln wie einer UV-Lampe, hat jedoch dadurch einen begrenzten Wert, da man die UV-aktive Schicht auch überdrucken könnte und damit den visuellen Eindruck unter UV-Licht nachstellen könnte. Unter UV-aktiver Schicht ist im Zusammenhang mit dieser Erfindung eine solche Schicht zu verstehen, die unter Einstrahlung von UV-Licht eine Fluoreszenz zeigt. Diese Definition ist klar abzugrenzen von einer Schicht, die unter Einwirkung von UV-Licht polymerisiert bzw. aushärtet, was in der Terminologie der Drucktechnik bei den sogenannten UV-Farben der Fall ist. Eine Fälschung, die dadurch zustande kommt, dass eine UV-aktive Schicht überdruckt statt fotochemisch deaktiviert wird, liesse sich zwar mikroskopisch nachweisen, was das Merkmal wiederum auf ein forensisches Niveau heben würde.

Die WO 2009/074284 beschreibt ein Sicherheitselement, das eine optisch variable Farbschicht und eine weitere, durch ein äusseres Magnetfeld zuerst reversibel ausrichtbare Effektpigmente enthaltende Schicht aufweist, die nach Zerstören ihrer Kapseln durch UV-Härten in ihrer Lage fixiert werden, wobei der Grad der Ausprägung des betrachtungswinkelabhängigen visuellen Eindrucks der optisch variablen Effektpigmente von der Orientierung der magnetisch ausgerichteten Effektpigmente relativ zur Ebene der Farbschicht abhängt, so dass ein attraktives visuelles Erscheinungsbild und hohe Fälschungssicherheit bestehen soll.

### DARSTELLUNG DER ERFINDUNG

Ein Vorteil des Verfahrens nach der EP 1 322 478 ist die Wirtschaftlichkeit in Bezug auf Handhabung, Zuverlässigkeit, Kosten. Die Erfinder haben erkannt, dass sich zudem die Möglichkeit bietet, die Laser-basierte Fluoreszenzlöschung mit anderen Personalisierungsverfahren beruhend auf einer Lasertechnologie zu kombinieren. In der Praxis werden Zweitstufenmerkmale dort gefordert, wo eine schnelle Authentifizierung des Dokumentes benötigt wird. Dies trifft typischerweise auf Grenzposten oder die Zutrittskontrolle zum Gate-Bereich eines Flughafens zu. Die Kombination ergänzender Merkmale hat sich an solchen Kontrollstellen als vorteilhaft erwiesen. Neben den Verfahren, die eine Authentifizierung unter Licht verschiedener Wellenlänge ermöglichen, haben sich Verfahren auf der Basis von magnetischen Merkmalen als Zweitstufenmerkmale bewährt. Seit langem werden Magnetstreifen für das Speichern von Datensätzen verwendet, wobei sich deren Nutzen über die Sicherheitsanwendung hinaus auf die Speicherung kleiner Datenmengen für kommerzielle Zwecke erstreckt, was z. B. auch bei Kundenkarten genutzt wird. Insbesondere für Sicherheitsanwendungen sind heute Verfahren etabliert, die auch eine magnetische Bilddarstellung erfassen können. Ein Motiv, z. B. ein Bild, eine Schrift oder ein Barcode, lässt sich leicht mit magnetischer Tinte auf dem Sicherheitsdokument aufbringen und so nachweisen. Ein magnetischer Sicherheitsfaden lässt sich zum Beispiel auch mit einem solchen Scan-Verfahren nachweisen. Magnetische Bilderfassungsgeräte werden zum Beispiel von Regula-Rus CJSC, Moskau, oder Matesy GmbH, Jena, angeboten. Je nach Ausführungsform der Nachweisgeräte sind die magnetischen Bilddarstellungsverfahren als Zweit- oder Drittstufen-Verfahren einsetzbar.

Dokumente zum Nachweis der Identität ihres Inhabers werden nicht nur auf die Echtheit des Dokumentes selbst hin überprüft, sondern besitzen überdies Merkmale, die für den Inhaber des Dokumentes kennzeichnend sind. Es muss demnach die latente Möglichkeit gegeben sein, das Dokument angepasst auf seinen Träger zu individualisieren. Das ist eine Forderung, die typischerweise mit einem Porträt erfüllt wird. Ein rein visueller Vergleich zwischen dem Konterfei des Trägers im Dokument und seinem Gesicht ist nur bedingt als sicher anzusehen. Biometrische Verfahren versprechen zwar eine zuverlässigere Identifikation, sind aber mit einem Aufwand verknüpft, der für die meisten Kontrollstellen nicht praktikabel ist. Hingegen stellen Zweitstufenmerkmale einen guten Kompromiss zwischen Manipulationssicherheit und Prüfungsaufwand dar.

Es ist bekannt, bei der Herstellung und Personalisierung von Identitätsdokumenten fluoreszierende oder magnetische Merkmale oder beide Merkmalstypen auf demselben Dokument zu verwenden. Das Herstellen und Personalisieren der magnetischen und fluoreszierenden Merkmale in einem Dokument werden jedoch nach dem Stand der Technik technisch getrennt voneinander durchgeführt. Beispielsweise können fluoreszierende Farben durch einen Druck aufgebracht und durch Bestrahlung mit UV-Licht als Leuchten verifiziert werden. Eine Deaktivierung der fluoreszierenden Oberflächenelemente des Dokumentes kann dann durch einen opaken Aufdruck oder eine opake Folie erfolgen.

Eine andere Möglichkeit zur Deaktivierung der Fluoreszenz ist die in der EP 1 322 478 B1 vorgeschlagene fotochemische Zerstörung der Fluoreszenz-aktiven Verbindung bzw. deren Umwandlung in eine nicht fluoreszierende Verbindung. Für die Personalisierung von fertigen, jedoch nicht-personalisierten Dokumenten, zum Beispiel in einem Konsulat oder einem zuständigen Gemeindeamt, ist das Ausbleichen eines Fluoreszenz-aktiven Substrates, z. B. die Personalisierungsseite eines Reisepasses, mit einem Desktop-Gerät eine sehr praktikable Lösung, die sich durch Zuverlässigkeit, eine saubere und bedienungsfreundliche Handhabung und geringe Kosten auszeichnet (kein Verbrauchsmaterial).

Die Träger einer Magnetisierung, die für magnetische Sicherheitsmerkmale nach dem Stand der Technik herangezogen werden, sind im Gegensatz zu den Fluoreszenzfarbstoffen anorganischer Natur, z. B. Eisen, Kobalt, Nickel, und mit seltenen Erden dotierte Eisenmetalle, dotiertes Manganoxid, magnetische Perowskite, Eisen(II,III)-Oxid (Magnetit), etc., und können durch Einwirkung von elektromagnetischer Strahlung nicht photochemisch ihrer magnetischen Wirkung beraubt werden. Für diese Metallmagnete wird in der einschlägigen Natur auch die Bezeichnung atomare Magnete verwendet. Üblich ist beispielsweise magnetische Tinte auf der Basis von Magnetit mit einer Korngrösse zwischen 2 nm und 20 nm, um einem nicht-magnetischen Substrat wie Papier oder einem Polymer einen makroskopisch messbaren Magnetismus zu verleihen. Eine Entmagnetisierung dieser anorganischen Magnete ist zwar mit dem Anlegen eines Koerzitivfeldes möglich, was aber nicht bedeutet, dass der Ferromagnetismus des Substrates irreversibel verschwindet. Eine erneute Magnetisierung ist durch Anlegen eines entsprechenden Feldes jederzeit möglich.

Grundlage des Magnetismus als makroskopisches Phänomen ist die Wechselwirkung vieler Elektronen mit ungepaartem Spin, wobei eine minimale Anzahl von Elektronen mit gleichgerichtetem Spin erforderlich ist (kooperativer Effekt). Eine messbare Remanenz und damit ein Ferromagnetismus oder Ferrimagnetismus kann sich bei isolierten Radikalen oder zum Beispiel auch ungepaarten Elektronen nicht einstellen, sofern die Spin-Spin-Wechselwirkung zwischen den ungepaarten Elektronen nur klein oder gar nicht vorhanden ist. Der Übergang vom Paramagnetismus zum Ferro- oder Ferrimagnetismus setzt eine Spin-Spin-Kopplung voraus, die sich über eine genügend hohe Zahl von Elektronen erstreckt. Die quantenmechanischen Voraussetzungen verlangen unter anderem eine minimale Nähe zwischen den ungepaarten Elektronen mit gleichgerichtetem Spin. Fernwirkungen von 0.3 nm bis 0.5 nm sind Werte für metallische Ferromagnete, während die Fernwirkung molekularer Einheiten durch "Superaustausch"-Mechanismen bis zu einem Nanometer und mehr betragen kann. Molekulare Magnete unterliegen somit bestimmten Bedingungen, zum Beispiel hinsichtlich ihrer räumlichen Struktur, der Natur ihrer Bindungen und Natur des ungepaarten Elektrons oder der ungepaarten Elektronen in einem Molekül. Da thermische Einflüsse einen unmittelbaren Einfluss auf die Fernwirkung der Spins der ungepaarten Elektronen haben, gibt es Grenztemperaturen, oberhalb derer keine ausreichende Kopplung und damit kein makroskopischer Magnetismus mehr besteht. Die entsprechenden Temperaturwerte, als Curie-Temperaturen bezeichnet, sind spezifische Stoffkonstanten für jedes , magnetische Material. Für praktische Anwendungen, insbesondere Anwendungen auf dem Gebiet der ID-Dokumente, sind nur Curie-Temperaturen oberhalb der Raumtemperatur sinnvoll. Für klassische magnetische Werkstoffe gelten Curie-Temperaturen (T_{c}) in einer verwertbaren Grössenordnung wie zum Beispiel bei Fe 768 °C, Co 1121 °C, Ni 360 °C, SmCo 750 °C, Fe₂O₃ 450 °C oder NdFeB 300 °C. Magnetooptische Speicherverfahren nutzen die Curie-Temperaturen, um durch Einwirkung eines Lasers an einem bestimmten Ort des Speichermediums das magnetische Grundmaterial über seine Curie-Temperatur zu erhitzen und somit die darauf befindliche Information zu löschen. Eine erneute Magnetisierung ist dazu geeignet, neue Datensätze auf dem gleichen Speichermedium abzulegen. Klassische magnetooptische Speicherverfahren sind also reversible Verfahren.

Es ist daher eine Aufgabe der vorliegenden Erfindung, ausgehend von der EP 1 322 478 B1 eine Personalisierung mit höherer Verlässlichkeit und der Möglichkeit der späteren Verifikation dieser Personalisierung zu schaffen, welche sowohl wirtschaftlich und schnell durchführbar ist.

Mit anderen Worten, es ist ein Ziel der vorliegenden Erfindung, ein Sicherheitsdokument nach seiner Herstellung zu personalisieren, wobei dazu einerseits eine wirtschaftliche und schnelle Methode bereitgestellt wird und andererseits mehrere, der Sicherheit wegen aber mechanistisch völlig verschiedene Individualsierungsmerkmale sich dergestalt ergänzen, dass durch die Redundanz der Merkmale eine höhere Sicherheit in Bezug auf Authentifizierung und Identifikation gegeben ist. Ein weiterer Aspekt der Aufgabe ist, dass die Verifikation der personalisierten Daten mit heute üblichen Geräten bei staatlichen Kontrollstellen möglich wird.

Die Aufgabe wird durch die Vorrichtung mit den Merkmalen des Anspruchs 1, bzw. des Anspruchs 12, gelöst. Weitere Ausführungsformen sind in den abhängigen Ansprüchen angegeben.

Es werden also Datenträger jeglicher Art, insbesondere Kunststoffkarten, mit in dem Kartenverbund eingebrachten Echtheitsmerkmalen angegeben, die bei Bestrahlung mit einem energiereichen Strahl, z.B. einem Laserstrahl oder einem Elektronen- oder Neutronenstrahl, personalisierbar sind. Die personalisierbaren Echtheitsmerkmale bestehen aus mindestens einer farbaktiven Komponente und mindestens einer magnetisierbaren Komponente, wobei die personalisierbaren Echtheitsmerkmale lumineszierend und magnetisch ausgebildet sind. In diesem Dokument ist zu verstehen, dass sich der Begriff farbaktiv auf eine Eigenschaft der farbaktiven Komponente bezieht, aufgrund welcher nach einer Anregung der farbaktiven Komponente mittels elektromagnetischer Strahlung eine Strahlung im sichtbaren und / oder ultravioletten und / oder infraroten Bereich des elektromagnetischen Spektrums ausgesendet wird. Weiter ist hier zu verstehen, dass sich der Begriff magnetisierbar auf eine Eigenschaft bezieht, welche die magnetisierbare Komponente in ihrem Ursprungszustand besitzt. Die magnetisierbare Komponente kann vollflächig oder in Teilen in einem Magnetisierungsvorgang magnetisiert werden, so dass die magnetisierten Teile nach dem Magnetisierungsvorgang magnetisch sind und hier als magnetische Komponente bezeichnet werden. Diese Magnetisierung der magnetisierbaren Komponente kann durch ein magnetisierendes Gerät bewirkt werden. Dieser Magnetismus kann fotochemisch ganz oder in Teilen gelöscht werden, so dass Echtheitsmerkmale entstehen, welche in den bestrahlten Teilen weder magnetisch noch magnetisierbar sind. Die Intensität und / oder Wellenlänge des Strahls wird so gewählt, dass die personalisierbaren lumineszierenden und magnetischen Echtheitsmerkmale bei einer Bestrahlung eine lokale Strukturänderung erfahren, wobei durch die lokale Strukturänderung die farbaktive Komponente und die magnetisierbare Komponente der personalisierbaren lumineszierenden und magnetischen Echtheitsmerkmale mindestens teilweise zerstört werden. Dabei leuchten die personalisierten lumineszierenden Echtheitsmerkmale bei Bestrahlung nicht mit den nicht-personalisierten lumineszierenden Echtheitsmerkmalen auf, wodurch ein Negativbild in einem aufleuchtenden Gesamtbild bzw. ein negatives Lumineszenz-Bild sichtbar wird, und die personalisierten magnetischen Echtheitsmerkmale bilden nach der Bestrahlung einen Magnetfeld-freien Bereich im Gesamtbild.

Durch die Einwirkung geeigneter Strahlung auf ein Substrat mit fluoreszierenden und magnetischen Flächenelementen, bevorzugt aus einer Strahlenquelle und in einem Arbeitsgang, werden also die Lumineszenz als auch die Magnetisierung an der Einwirkungsstelle, bevorzugt irreversibel, aufgehoben.

Die nicht-personalisierten Bereiche leuchten damit bei entsprechender Anregung auf und / oder weisen einen Magnetismus auf.

Gemäss den weiter unten genauer ausgeführten Ausführungsformen werden also alle möglichen Einbindungen und Einbauorte der erfindungsgemässen Echtheitsmerkmale in dem der Identifikation dienenden Datenträger beansprucht. Die lumineszierenden und magnetisierbaren oder magnetischen Echtheitsmerkmale können daher als Druckfarbe auf eine bestimmte oder mehrere Schichten des Datenträgers aufgedruckt oder in anderer Weise aufgebracht sein. Die Echtheitsmerkmale können aber auch in das Kunststoffpolymer einer oder mehreren Schichten des Datenträgers eingebunden sein. Die lumineszierenden oder magnetisierbaren oder magnetischen Echtheitsmerkmale können auch in den Kleber, den Lack oder als Additiv in das Kunststoffmaterial eingebunden sein. Die lumineszierenden und magnetisierbaren oder magnetischen Echtheitsmerkmale müssen nicht an den gleichen Orten des Datenträgers eingebaut sein, noch müssen sie über den gleichen Weg eingebunden sein. So ist es zum Beispiel denkbar, dass die farbaktive Komponente Teil eines Adhäsives und die magnetische oder magnetisierbare Komponente in einer Folie eingebracht werden.

Die farbaktive Komponente befindet sich in und / oder auf mindestens einer lumineszierenden Schicht, und die magnetische oder magnetisierbare Komponente befindet sich in und / oder auf mindestens einer magnetisierbaren Schicht.

Die magnetisierbare Schicht kann somit die magnetisierbare Komponente enthalten, welche noch keiner Magnetisierung durch ein magnetisierendes Gerät unterzogen wurde. Die magnetisierbare Schicht kann aber auch die magnetische Komponente enthalten, wenn die Magnetisierung der magnetisierbaren Komponente bereits erfolgt ist oder wenn eine schon in ihrem Ursprungszustand magnetische Komponente verwendet wird.

Der Kartenverbund kann eine Deckschicht und eine Trägerschicht aufweisen, wobei die Deckschicht auf der der Bestrahlung zugewandten Seite des Datenträgers angeordnet sein kann, und welche gegenüber dem verwendeten Strahl transluzent ist.

Die magnetisierbare Schicht und die lumineszierende Schicht können übereinander angeordnet sein, wobei diejenige Schicht welche oberhalb angeordnet ist und als erste Schicht vom Strahl bestrahlt wird, vorzugsweise transluzent für den verwendeten Strahl ist.

Die lumineszierende Komponente und die magnetische oder magnetisierbare Komponente können sich gemeinsam innerhalb und / oder gemeinsam auf mindestens einer magneto-lumineszierenden Schicht befinden.

Die magneto-lumineszierende Schicht kann somit die magnetisierbare Komponente enthalten, welche noch keiner Magnetisierung durch ein magnetisierendes Gerät unterzogen wurde. Die magneto-lumineszierende Schicht kann aber auch die magnetische Komponente enthalten, wenn die Magnetisierung der magnetisierbaren Komponente bereits erfolgt ist.

Eine solche Schicht, hier als magneto-lumineszierende Schicht bezeichnet, kann aus dem Druck oder einem Sprayauftrag einer entsprechend formulierten Farbe sein, Teil einer Laminationsfolie oder Teil eines Dünnfilms sein.

Die lumineszierende Komponente und die magnetische oder magnetisierbare Komponente können Bestandteil einer Verbindung sein. Diese Verbindung kann sich in und / oder auf mindestens einer molekular-magneto-lumineszierenden Schicht befinden.
Des Weiteren wird also eine Ausführungsform beansprucht, in welcher beide Funktionen, also die der farbaktiven, lumineszierenden Komponente und die der magnetischen oder magnetisierbaren Komponente, in einem Molekül vereint vorliegen können. Eine Schicht, in welcher oder auf welcher sich solche Moleküle befinden, wird hier als molekular-magneto-lumineszierenden Schicht bezeichnet.

Die molekular-magneto-lumineszierende Schicht kann somit eine Verbindung enthalten, in welcher die magnetisierbare Komponente noch keiner Magnetisierung durch ein magnetisierendes Gerät unterzogen wurde. Die molekular-magneto-lumineszierende Schicht kann aber auch eine Verbindung enthalten, in welcher die Magnetisierung der magnetisierbaren Komponente bereits erfolgt ist.

Der Datenträger kann eine oder mehrere Zusatzschichten aufweisen, wobei diese als Schutzschicht ausgebildet sein können und / oder weitere Zusatzsubstanzen enthalten, welche sich beim Bestrahlen verfärben.

Die in dieser Ausführungsform beschriebene Schicht, welche hier als Schutzschicht bezeichnet wird, kann sich auf einem Substrat bzw. auf einem Datenträger beispielsweise aus einem Papier oder Polymer, z. B. Polycarbonat, befinden. Eine solche Schutzschicht kann die weiteren Schichten des Datenträgers welche z.B. die lumineszierenden oder magnetischen oder magnetisierbaren Komponenten aufweisen, umgeben. Diese Schutzschichten können als Primer, als Schutz für das Substrat, z. B. in der Form von opaken Schichten gegen die Einwirkung von Laserlicht auf ein empfindliches Substrat, wie z. B. Papier, dienen oder grafische Funktionen tragen, z. B. unter Lasereinwirkung karbonisieren, also am Wirkungsort der Laserstrahlung schwarz werden, oder farbige Pigmente oder Farbstoffe beinhalten, die ihrerseits von Laserlicht gebleicht werden.

Die magnetisierbare Schicht und / oder die lumineszierende Schicht und / oder die magneto-lumineszierende Schicht und / oder die molekular-magneto-lumineszierende Schicht und / oder die Zusatzschicht können sich vollflächig über den Datenträger erstrecken.

Die magnetisierbare Schicht und die lumineszierende Schicht können nebeneinander angeordnet sein.

Die mindestens teilweise Zerstörung der farbaktiven Komponente und der magnetischen Komponente der personalisierbaren Echtheitsmerkmale kann durch eine Bestrahlung derselben Art erfolgen.

Eine bevorzugte Ausführungsform kann also die Kombination der Aktivität einer Strahlungsquelle sein, etwa die eines Lasers geeigneter Frequenz mit der Reaktion in verschiedenen Schichten, z.B. in einer magnetisierbaren Schicht und einer lumineszierenden Schicht, die beide gleichermassen durch die Bestrahlung ihre Struktur so ändern, dass die Lumineszenz als auch die Magnetisierbarkeit aufgehoben werden.

Die mindestens teilweise Zerstörung der farbaktiven Komponente und der magnetisierbaren Komponente der personalisierbaren Echtheitsmerkmale kann auch durch mindestens zwei Sorten einer Bestrahlung erfolgen.

Dabei kann beispielsweise eine Personalisierung aufgrund der Einwirkung zwei Sorten einer elektromagnetischen Strahlung entstehen, wobei eine erste Strahlungssorte - gekennzeichnet durch Parameter wie Frequenz, Intensität, Polarisierung, etc. - wirksam für die Aufhebung der Magnetisierung und eine zweite Strahlungsorte wirksam für die Aufhebung der Lumineszenz ist.

Die personalisierten Echtheitsmerkmale können unter Einwirkung von elektromagnetischer Strahlung und / oder von Korpuskelstrahlung zum Aufleuchten gebracht und entmagnetisiert werden und / oder können durch Photolumineszenz und/oder Chemolumineszenz und/oder Biolumineszenz bewirkbar sein.

Es können also in allen hier offenbarten Ausführungsformen auch Laserstrahlung im NIR-Frequenzbereich oder Korpuskelstrahlung, wie zum Beispiel Elektronenstrahlung (e-beam-Verfahren) verwendet werden, um eine Deaktivierung der lumineszierenden und/oder der magnetischen Komponenten zu bewirken.

Desgleichen wird im Sinne der Erfindung auch die Deaktivierung so genannter Up-Converter (Anti-Stokes-Mechanismus) beansprucht, sofern diese unter Einwirkung von elektromagentischer Strahlung zerstört oder auf anderem Wege ihrer Energie konvertierenden Funktion beraubt werden können, beispielsweise dadurch dass ein kooperativer Effekt zwischen einem Seltenerd-Up-Converter und einem Hilfsstoff - in der Literatur auch beschrieben als photonic concentrator, solar concentrator oder fluorescent concentrator - durch die Einwirkung von beispielsweise Laserstrahlung auf den Hilfsstoff gestört wird. Up-Converter sind durch Anregung im NIR-Frequenzbereich im Sichtbaren erkennbar. Organische Moleküle, die als Hilfsstoff im Sinne eines fluorescent concentrators in Frage kommen sind z. B. als Fluoreszenzfarbstoffe in OLEDs bekannt oder als fertig konfektionierte Farbstoffe auf der Basis von Perylen-Derviaten erhältlich.

Das Aufleuchten kann im sichtbaren und / oder im nicht-sichtbaren Spektralbereich, beispielsweise nahen Infrarot, z. B. mit Indocyanin Grün, erfolgen.

Die lumineszierende Substanz der personalisierbaren Echtheitsmerkmale kann zu den Stoffklassen der Zinnsulfidderivate, Benzoxazinonderivate, Pyrenderivate oder Pyrazolinderivate, Prophyrine, Stilbene, optischen Aufheller (z, B. Blancophor), Chinine oder Komplexe mit Triazolliganden gehören. Die lumineszierenden Substanzen können damit auch aus der belebten Natur stammen, metallorganische Komplexe, z. B. auch für OLEDs bedeutsame Verbindungen, sein und in begrenztem Umfang auch eine anorganische Verbindungen sein. Die magnetisierbare Substanz des personalisierbaren Echtheitsmerkmals kann zu den Stoffklassen der metallorganischen Komplexe, beispielsweise mit CN- oder TCNE-Liganden, Metallocene oder Valenztautomere, gehören oder eine organische Verbindung mit resonanzstabilisierter und / oder durch sterische Effekte stabilisierte radikaltragende Funktion sein. Eine Resonanzstabilisierung von Radikalen liegt z. B. in mehrkernigen, aromatischen Verbindungen, wie am Beispiel Triphenylmethylradikals bekannt, vor oder ist auch möglich in kondensierten aromatischen und /oder konjugierten π.Systemen, wie in Perylen-Derivaten. Eine sterische Radikalstabilisierung ist z. B. in Form des Stoffs TEMPO (2,2,6,6-Tetramethylpiperidinoxyl) bekannt. Besonders geeignet sind Stoffe, deren Radikal sowohl durch sterische wie Resonanzeffekte stabilisiert ist. Die radikaltragenden Funktionen können Carbonylradikalanion oder Nitroxidradikale sein oder die Anionradikale von TCNQ (Tetracyanochinondimethan), TCNE (Tetracyanoethylen) oder Metallocenliganden wie Bis-Pentamethylcyclopentadienyl (MCp₂) sowie allgemein π-Systeme in den Liganden von high-spin-Komplexen. Die Verbindung des personalisierbaren Echtheitsmerkmals kann zu den genannten Molekülklassen gehören oder auch aus Kombinationen dieser Molekülklassen bestehen.

Die magnetisierbare Substanz besitzt bevorzugt eine Curie-Temperatur oberhalb der Raumtemperatur.

Geeignete Verbindungsklassen für UV-Farben im Sinne der Erfindung, d. h. durch UV-Licht anregbare Farbstoffe oder Pigmente mit einer Emission im Bereich des sichtbaren Lichtes umfassen also die Stoffklassen der Zinnsulfid-, Benzoxazinon, Pyren- und Pyrazolinderivate, sind aber nicht auf diese beschränkt. Es empfiehlt sich, ist aber nicht zwingend nötig, dass fluoreszenzaktive Verbindungen in Formulierungen vorgelegt werden, die diese vor den üblichen Umweltbedingungen, insbesondere der Einwirkung von Sauerstoff, schützen, um eine höhere Quantenausbeute der Excimere zu erhöhen bzw. ein Quenchen, beispielsweise durch Sauerstoff, zu vermeiden. Lumineszenzfarben, die nicht durch UV-Strahlung, sondern auch durch andere Mechanismen zur Lumineszenz angeregt werden, beispielsweise Chemo-, Bio- oder Tribolumineszenz sind auch vom Anspruch der Erfindung umfasst, obgleich die Anregung durch UV-Licht in der Praxis der Dokumentenprüfung die bevorzugte Ausführungsform darstellt.

Vorzugsweise werden bei den magnetisierbaren Substanzen ferromagnetische oder ferrimagnetische, organischer Stoffe (sogenannte molekulare Magnete) verwendet, die Absorptionsbanden aufweisen, die mit dem Laserlicht eine Wechselwirkung eingehen und nach Bestrahlung eine Strukturänderung erfahren, die ihren makroskopischen beobachtbaren Magnetismus deutlich reduziert oder gar aufhebt.

Die bekannten rein organischen Ferromagnete weisen Curie-Temperaturen nahe am absoluten Nullpunkt auf und kommen daher für eine praktische Verwertung nicht in Frage. Beispiele dafür sind das p-Nitrophenyl-nitronyl-nitroxid-Radikal T_{c} = 0.6 K, organisch dotierte Fullerensysteme, z. B. TDAE Tc = 16.1 K oder die β-Phase des Dithiadiazolyl-Radikals in p-NC.C₆F₄.CNSSN mit T_{c} = 35.5 K, wobei diese Moleküle nur in einer supramolekularen, räumlichen Anordnung der Molekularanordnung einen makroskopisch beobachtbaren Magnetismus aufweisen. Die rein organischen Molekülmagnete sind gegenwärtig Gegenstand eines sehr dynamischen Forschungsgebietes, das die mittelfristige Realisierung organischer Molekülmagnete mit Curie-Temperaturen bei Raumtemperatur oder höher verspricht. Nach derzeitigem Stand der Technik versprechen metall-organische Stoffe, insbesondere die Cyanö-Komplexe, eine höhere Tauglichkeit im Sinne dieser Erfindung. Die Forschungsarbeiten auf dem Gebiet der organischen Magnete wurden mit dem Komplex V[(Cr(CN)₆]_{0.86}∗2.8 H₂O mit einer Curie-Temperatur von 315 K angestossen. Typische Koerzitivfeldstärken liegen in der Grössenordnung von 1000 Oe bzw. 80 KA/m, was gut in den Arbeitsbereich käuflicher Geräte passt, die sich für Kontrollstellen zur visuellen Darstellung von Magnetfeldern eignen. Der Stand der Technik weist - wenn auch ungesichert - auf metall-organische Verbindungen hin, die Koerzitivfeldstärken weit darüber hinaus im Bereich des SmCo mit 17800 Oe liegen, welche damit schon deutlich über die Anforderungen dieser Erfindung bezüglich der Magnetisierbarkeit hinausgehen. Der ferrimagnetische Komplex V(TCNE)₂∗0.5CH₂Cl₂ weist eine dem Chromdioxid vergleichbare molekulare Sättigungsmagnetisierung und Curie-Temperatur sowie eine mit 60 Oe für die Praxis ausreichende Koerzitivkraft auf. Gleichzeitig lässt das Tetracyanoethylen-Dimer-Anionradikal mit einer starken Absorptionsbande bei 533 bis 535 nm erwarten, dass eine die Anregung mit sichtbarem Licht, insbesondere Laserlicht, entsprechender Wellenlänge das π-Dimer und damit das Radikal destabilisiert. Die Empfindlichkeit des Komplexes an Luft und unter thermischer Belastung über 350 K relativiert seinen Nutzen im Sinne der Erfindung zwar, aber es zeigt sich damit, dass stabile Derivate oder verwandte Komplexverbindung in einer stabilisierenden Formulierung geeignete Kandidaten für molekulare Magnete im Sinne der erfinderischen Anwendung sind.

Die Herstellung der rein organischen Magnete ist stets vom Problem der Verunreinigung durch metallische, ebenfalls magnetische Eigenschaften aufweisende Komponenten begleitet, so dass viele Ergebnisse die Darstellung ferromagnetischer organischer und metall-organischer Verbindungen betreffend, die nicht unter sehr kontrollierten Bedingungen hinsichtlich ihrer Reinheit entstanden sind, bezweifelt werden müssen. Beispielsweise schlägt die US 6,262,306 B (Christian Leriche et al) eine ganze Reihe von Iminen vor, die ohne den Zwang einer supramolekularen Ordnung, z. B. als Polymer, ferromagnetische Eigenschaften haben sollen. Die EP 0 561 279 B (Ohtake, Tadashi et al) reklamiert den Magnetismus in einem organischen Film, wobei Träger der ungepaarten Elektronen sowohl Eisenmetalle erwähnt sind als auch solche, die im elementaren Zustand nur paramagnetisch vorliegen. Daneben sind in dieser Schrift auch organische Materialien genannt. Die EP 0 561 279 B fordert zwar die Einbettung in einen Film, der die supramolekulare Ordnung stabilisiert, unterliegt aber auch dem Verdacht, dass metallische Verunreinigungen den Magnetismus bewirkt haben könnten, zumal auch Filme, die klassischen Metallmagnete enthalten, beansprucht werden. Im Sinne dieser Erfindung sind die Stoffklassen, die in den vorgenannten beiden Patenten beschrieben wurden, vorbehaltlich ihrer Ausführbarkeit nicht nutzbar, da kein Chromophor vorhanden ist, dass durch eine Wechselwirkung mit Laserlicht seine Struktur so ändern könnte, dass eine Spin-Spin-Wechselwirkung so reduziert wird, dass eine vor der Bestrahlung beobachtbare Remanenz verschwinden würde. Im Gegensatz zu den vorgenannten Konzepten von Leriche und Ohtake schlägt Heinz Langhals in der DE 10 2008 011 817 A Perylen-3,4:9,10-tetracarbonsäurebisimide als Träger für einen organischen Hochtemperatur-Ferromagneten vor. Als ausgedehnte π-Systeme stabilisieren sie einerseits das Radikalanion an einer Imidfunktion sehr gut und weisen andererseits eine Tendenz zur Selbstassemblierung auf, die diese Moleküle in für einen Spin-Superaustausch vorteilhafte Weise anordnen. Die chemische und photochemische Beständigkeit kann des Weiteren mit geeigneten Resten an den endständigen Stickstoffatomen beeinflusst werden. Perylene wie auch andere kondensierte Aromate weisen schliesslich Absorptionsspektren mit Banden im sichtbaren und NIR-Bereich auf, was die Wechselwirkung und damit mögliche Beeinflussung des radikalischen Elektrons durch Laserstrahlung nahelegt. Durch geeignete Funktionalisierung des chemischen Grundgerüstes lässt sich ein solcher Molekularmagnet an die Anforderungen eines magnetisch lesbaren und mit Laserstrahlung irreversibel löschbaren Sicherheitsdokumentes anpassen. Einerseits muss ein photochemischer Mechanismus erlaubt sein, der nach Anregung mit Laserlicht das Radikal destabilisiert, was beispielsweise über eine Umlagerung des stabilisierenden konjugierten Bindungssystems, eine Veränderung anderer stabilisierender Gruppen oder eine Anregung des Radikalelektrons selbst mit einer folgenden Kombinationsreaktion erfolgen kann. Es ist auch denkbar, den Molekularmagnet mit einem latenten Reaktanden in Kontakt zu bringen, der nach Einwirkung mit Laserlicht, mit dem ungepaarten Elektron eine Reaktion eingeht. Andererseits muss über die Lebensdauer des Sicherheitsdokumentes der Molekularmagnet, im Beispiel des Carbonsäureperylens also das Radikalanion, stabil bleiben. Diese beiden scheinbar gegensätzlichen Forderungen lassen sich aber mit einem geeigneten Design des ferro- bzw. ferrimagnetischen Moleküls erfüllen. Die chemische Beständigkeit der Verbindungen mit unter elektromagnetischer Strahlung löschbarem Ferro- oder Ferrimagnetismus gegenüber den üblichen Umweltbedingungen muss aufgrund der Reaktivität der das Radikal tragenden Gruppe grundsätzlich als zu hoch für eine dauerhafte Verwendung in einem Alltagsprodukt angesehen werden, jedoch ist der Schutz von an Luft oder Feuchtigkeit instabilen Verbindungen mit einer Verkapselung einschlägig bekannt.

Für die Herstellung eines Sicherheitsdokumentes bietet sich an, den Molekularmagneten als Farbpigment - gegebenenfalls als gekapseltes Farbpigment - in einer Farbe oder einem Lack durch ein Druck- oder Beschichtungsverfahren aufzutragen. Die chemische Beständigkeit lässt sich auch dadurch erreichen, dass das magnetische, organische Material mit einer Schutzschicht versehen wird, um es vor Umwelteinflüssen zu schützen. Die Schutzschicht oder das Kapselmaterial müssen dabei für die Laserstrahlung der geeigneten Frequenz mindestens teilweise transluzent sein.

Die magnetisierbare Schicht enthält also vorzugsweise Funktionsträger (Molekularmagnete) aus den Verbindungsklassen umfassend alle rein organischen Moleküle, z. b. carbonylgruppenfunktionalsierte kondensierte Aromate oder Heterozyklen, und metallorganischen Moleküle, z. B. mit TCNE Liganden oder Liganden mit mehrkernigen Aromaten, die ihrerseits ausgedehnte radikalstabiliserende π-Systeme etablieren, mit ungepaarten Elektronen mit gleich ausgerichtetem Spin und einer Überordnung, die eine für einen makroskopisch beobachtbaren Magnetismus ausreichende Spin-Spin-Wechselwirkung und eine ausreichende Spindichte erlaubt. Dabei kann die Überordnung durch eine Selbstassemblierung, einen polymeren Verbund von magnetisierbaren Monomeren oder eine geordnete Fixierung in einer Matrix, beispielsweise einem Film, erfolgen.

Wie oben bereits erwähnt, gehört die Verbindung der personalisierbaren Echtheitsmerkmale, in welcher die lumineszierende Komponente und die magnetisierbare Komponente Bestandteil dieser Verbindung sind, vorzugsweise zu den Molekülklassen der polyzyklischen Verbindungen, aromatischen Verbindungen oder konjugierten Verbindungen, die unter Einwirkung von hochenergetischem Licht, zum Beispiel UV-Licht, eine Absorption aufweisen und im sichtbaren Bereich lumineszieren und gleichermassen strukturelle Merkmale aufweisen, die einen Molekularmagneten konstituieren können, z. B. ein Radikal oder Radikalanion stabilisierende *π*-Systeme mit eine Kombinationsreaktion unterdrückenden Schutzgruppen. Bekannt sind Pyrene mit lumineszierender Funktion und Perylene mit ferromagnetischer Funktion. Die Artverwandtschaft beider Molekülklassen weist daraufhin, dass die Kombination dieser Funktionen in einem Molekül erfindungsgemäss denkbar ist.

Zusammenfassend lässt sich sagen, dass die hier verwendeten magnetisierbaren Komponenten als sogenannte molekulare Magnete verstanden werden können. Dabei gibt es verschiedene Stoffklassen, welche abhängig von ihrer Zusammensetzung als organische oder metallorganische, zusammenfassend eben als molekulare Magnete bezeichnet werden. Wie bereits erwähnt ist die Grundlage des Magnetismus als makroskopisches Phänomen in diesen Molekülen hauptsächlich die Wechselwirkung zwischen ihren ungepaarten Elektronenspins. Insbesondere bedarf es dabei nicht nur Moleküle, deren Atome ein magnetisches Moment besitzen, sondern diese müssen auch derart im Molekül angeordnet sein, dass die magnetischen Momente miteinander in Wechselwirkung stehen. Die Distanzen, über die sich die Wechselwirkung erstreckt, sind dabei entscheidend für die Natur des makroskopisch messbaren Magnetismus. Weite Wechselwirkungsdistanzen, deren Ursache eine intramolekulare Ordnung oder eine grossräumige makromolekulare Ordnung ist, bieten die Voraussetzung für einen messbaren Ferro- oder Ferrimagnetismus. Dieser makroskopisch messbare Magnetismus bildet eine wesentliche Voraussetzung für diese Erfindung. Selbst wenn sich die Spin-Spin-Wechselwirkung auf eine rein intramolekulare Ausdehnung beschränkt, was beispielsweise in bestimmten Komplexen auftritt, deren spintragende Zentren über diamagnetische Brücken miteinander verbunden sind, lässt sich ein messbarer Effekt feststellen. Dieser äussert sich durch eine hohe Sättigungsmagnetisierung, ohne dass sich eine dauerhafte Magnetisierung nach Abstellen des äusseren magnetischen Feldes einstellt. Nachdem Abstellen des Koerzitivfeldes weisen solche Komplexe ein diamagnetisches Verhalten auf. Es sind demnach Einzelmolekülmagneten, deren besonderes magnetisches Verhalten Superparamagnetismus genannt wird. Es ist denkbar, dass auch Verbindungen mit superparamagnetischem Verhalten im Sinne der Erfindung nutzbar sind.

Im Wesentlichen beruht die Erfindung auf dem Ferromagnetismus oder Ferrimagnetismus organischer oder metallorganischer Strukturen, deren Magnetismus sich mit Laserlicht vermindern oder eliminieren lässt. Unter Ferromagnetismus versteht man die Eigenschaft bestimmter Materialien, Elementarmagnete, d.h. ein magnetisierbares Material mit magnetischem Dipol, welcher eine variable Richtung besitzt (also z.B. die oben erwähnten ungepaarten Elektronenspins der spintragenden atomaren Zentren) zu enthalten, die parallel zueinander ausgerichtet sein können. Diese Materialien zeigen in einem externen Magnetfeld eine eigene, vom äusseren Magnetfeld unabhängige, Magnetisierung. Diese Magnetisierung ist also nicht induziert, sondern das externe Magnetfeld bestimmt die Richtung der Elementarmagnete, nämlich, dass die Richtung der parallel ausgerichteten Elementarmagneten im ferromagnetischen Material so verdreht wird, dass sie parallel zum äusseren Magnetfeld zu liegen kommt, d.h. das ferromagnetische Material, hier also die magnetisierbare Komponente, wird magnetisiert. Der damit verwandte Ferrimagnetismus weist dagegen eine gewisse Anzahl antiparallel ausgerichtete Elementarmagnete auf, jedoch nicht gleich viele wie parallel ausgerichtete Elementarmagnete. Damit tritt in summa eine genügende Kopplung der Spins auf, um einen makroskopischen messbaren Magnetismus zu erzeugen. Beispiele für atomare Magnete aufweisend einen Ferrimagnetismus sind bestimmte Metalloxide mit Spinellstruktur.

Im Fall metallorganischer Komplexe sind sowohl ferro- als auch ferrimagnetische Kopplungen bekannt. Es ist es auch von Komplexen berichtet worden, die beide magnetische Eigenschaften aufweisen können. Die magnetisierbare Komponente eines Echtheitsmerkmals weist bevorzugterweise in einem externen Magnetfeld eine vom externen Magnetfeld unabhängige, eigene Magnetisierung auf, und wird durch das externe Magnetfeld magnetisiert. Dabei richtet sich die eigene Magnetisierung der magnetisierbaren Komponente parallel zum externen Magnetfeld aus, wodurch die magnetisierte Komponente danach magnetisch ist, und wodurch die personalisierbaren magnetischen Echtheitsmerkmale danach zu personalisierten magnetischen Echtheitsmerkmalen werden.

Molekulare Magnete können in Abhängigkeit von Temperatur, elektrischem Feld, Druck, mechanischer Einwirkung, chemischer Veränderung oder Lichteinwirkung vom ferromagnetischen in den antiferromagnetischen oder vom ferrimagnetischen in den paramagnetischen Zustand übergehen. So können die hier verwendeten molekularen Magnete beispielsweise Absorptionsbanden aufweisen, die mit dem Laserlicht eine Wechselwirkung eingehen und nach Bestrahlung eine Strukturänderung erfahren, die ihren makroskopischen beobachtbaren Magnetismus deutlich reduziert oder gar aufhebt. Dabei ist diese Entmagnetisierung ein Vorgang, durch den das dauermagnetisch gewordene ferromagnetische Material seine magnetische Polarisierung ganz oder teilweise verliert, d.h., die magnetisierbare Komponente wird ganz oder mindestens teilweise zerstört.

Diese fotochemische Löschung des Magnetismus führt zu Echtheitsmerkmalen, welche in den bestrahlten Teilen weder magnetisch noch magnetisierbar sind. Die somit personalisierten magnetischen Echtheitsmerkmale weisen daher am Ort der Bestrahlung einen Magnetfeld-freien Bereich auf. Während also die nicht bestrahlten Orte immer noch einen magnetischen Bereich aufweisen, welcher durch ein geeignetes Nachweisgerät beispielsweise in Bezug auf Richtung und Stärke des Magnetfeldes detektiert und visualisiert werden kann, wird der Magnetfeld-freie durch das Nachweisgerät nicht detektiert und visualisiert.

Nach der Bestrahlung mit einem energiereichen Strahl sind somit die personalisierten magnetischen Echtheitsmerkmale am Ort der Bestrahlung bevorzugterweise weder magnetisch noch magnetisierbar und bilden am Ort der Bestrahlung einen Magnetfeld verminderten oder Magnetfeld-freien Bereich.

Dieser Magnetfeld verminderte oder Magnetfeld-freie Bereich der personalisierten magnetischen Echtheitsmerkmale wird bei Betrachtung durch ein geeignetes Nachweisgerät nicht detektiert und / oder visualisiert, während Bereiche der personalisierten magnetischen Echtheitsmerkmale, die keiner Bestrahlung mit einem energiereichen Strahl ausgesetzt wurden, magnetische Bereiche aufweisen die durch das geeignete Nachweisgerät detektiert und / oder visualisiert werden.

Wie ebenfalls bereits erwähnt, kann anstelle einer ersten farbaktiven Komponente beispielsweise in Form einer lumineszierenden Substanz und einer weiteren magnetisierbaren Komponente beispielsweise in Form eines molekularen Magneten eine Verbindung für die personalisierbaren Echtheitsmerkmale verwendet werden, also eine einzige Komponente, welche sowohl farbaktiv als auch magnetisierbar ist. Das heisst, es kann eine molekulare Verbindung verwendet werden, welche sowohl lumineszierend als auch magnetisierbar ist, resp. magnetisiert wird, und wobei durch eine Bestrahlung sowohl der lumineszierende Bestandteil wie auch der magnetisierbare resp. magnetisierte Bestandteil der molekularen Verbindung mindestens teilweise zerstört wird. Die zumindest teilweise Zerstörung des lumineszierenden Bestandteils der molekularen Verbindung führt dazu, dass dieser Bereich der Echtheitsmerkmale bei Bestrahlung durch ein geeignetes Nachweisegerät nicht aufleuchtet, während die nicht bestrahlten Bereiche bei Bestrahlung durch das Nachweisgerät aufleuchten. Die zumindest teilweise Zerstörung des magnetisierbaren resp. magnetisierten Bestandteils der molekularen Verbindung führt dazu, dass dieser Bereich der Echtheitsmerkmale bei Betrachtung durch ein geeignetes Nachweisgerät nicht detektiert und visualisiert wird, während die nicht zerstörten Bereiche der Echtheitsmerkmale magnetische Bereiche aufweisen, die durch das Nachweisgerät beispielsweise in Bezug auf Richtung und Stärke des Magnetfeldes detektiert und visualisiert werden.

Bevorzugterweise wird also eine Verbindung verwendet, welche eine molekulare Verbindung ist, wobei die magnetisierbare Komponente und die farbaktive Komponente Bestandteile dieser molekularen Verbindung sind. Dabei ist die molekulare Verbindung sowohl lumineszierend als auch magnetisierbar, wobei die magnetisierbare Komponente der molekularen Verbindung durch das externe Magnetfeld magnetisiert wird und danach magnetisch ist, und wobei durch eine Bestrahlung sowohl der lumineszierende Bestandteil wie auch der magnetische Bestandteil der molekularen Verbindung mindestens teilweise am Ort der Bestrahlung zerstört werden.

Durch die mindestens teilweise Zerstörung des lumineszierenden Bestandteils der molekularen Verbindung wird dieser Bereich der Echtheitsmerkmale bei Bestrahlung durch das geeignete Nachweisegerät nicht aufleuchten, während die nicht bestrahlten Bereiche bei Bestrahlung durch das Nachweisgerät aufleuchten. Ebenso wird durch die mindestens teilweise Zerstörung des magnetischen Bestandteils der molekularen Verbindung dieser Bereich der Echtheitsmerkmale bei Betrachtung durch ein geeignetes Nachweisgerät nicht detektiert und / oder visualisiert, während die nicht bestrahlten Bereiche immer noch magnetische Bereiche sind die durch das Nachweisgerät detektiert und / oder visualisiert werden.

Die photochemisch deaktivierten und entmagnetisierten Teile der lumineszierenden und magnetischen Echtheitsmerkmale können über geeignete Nachweisgeräte als Bilder, Buchstaben, irgendwelche anderen Arten von Zeichen oder Strich- oder Punktmuster visualisiert werden. Die auf diese Weise in das fertige, aber nicht personalisierte Dokument eingebrachte Information kann für eine Personalisierung genutzt werden, aber auch Metadaten beinhalten, die zweckmässigerweise im Zuge der Personalisierung eingebracht werden, beispielsweise den Ort des Ausgabeamtes für das betreffende Sicherheitsdokument.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. Die Ausführungsformen, die nicht durch die Ansprüche gestützt würden, sind als nicht Teil der Erfindung anzusehen.

In den Zeichnungen zeigen:
- Fig. 1:: Schnitt durch einen Datenträger mit einem Kartenaufbau gemäss einer ersten Ausführungsform;
- Fig. 2:: Schnitt durch einen Datenträger mit einem Kartenaufbau gemäss einer zweiten Ausführungsform;
- Fig. 3:: Schematische Draufsicht auf den Datenträger nach den Figs. 1 und 2 nach Bestrahlung;
- Fig. 4:: Schnitt durch einen Datenträger mit einem Kartenaufbau gemäss einer dritten Ausfuhrungsform;
- Fig. 5:: Schematische Draufsicht auf den Datenträger nach Fig. 4 nach Bestrahlung;
- Fig. 6:: Schnitt durch einen Datenträger mit einem Kartenaufbau gemäss einer vierten Ausführungsform;
- Fig. 7:: Darstellung einer ersten Anordnung mit zwei unterschiedlichen Lichtquellen zur Personalisierung eines Datenträgers gemäss der vierten Ausführungsform; und
- Fig. 8:: Darstellung einer zweiten Anordnung mit zwei unterschiedlichen Lichtquellen zur Personalisierung eines Datenträgers gemäss der vierten Ausführungsform.

### BESCHREIBUNG BEVORZUGTER AUSFÜHRUNGSFORMEN

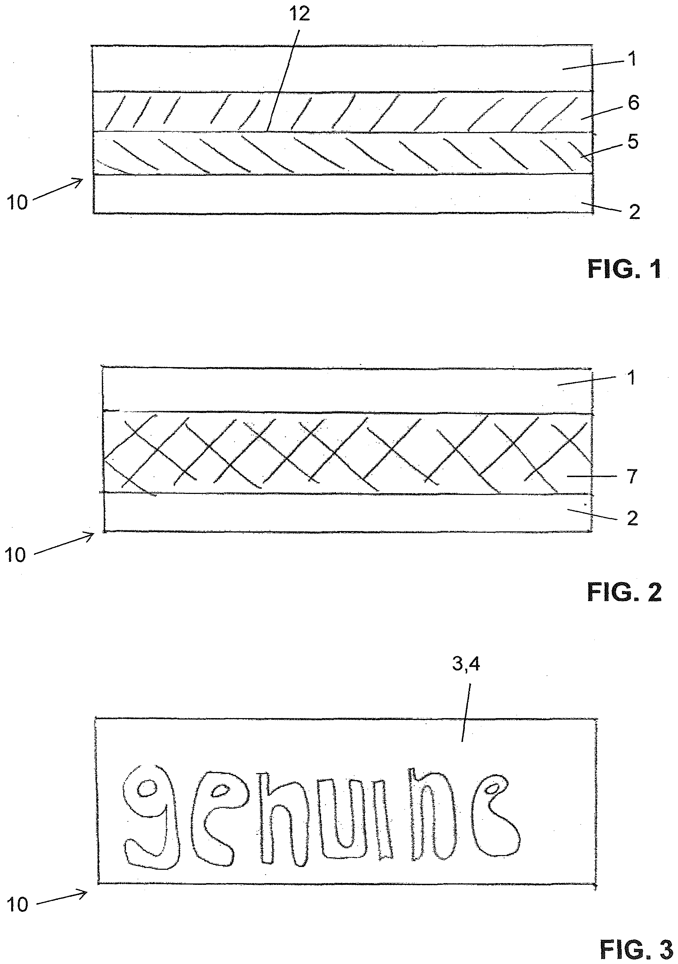

Die Fig. 1 zeigt in unmassstäblichen Grössenverhältnissen eine Karte als Datenträger 10 in einer Schnittdarstellung. Der Datenträger 10 kann insbesondere eine Kunststoffkarte sein mit einem Kartenverbund in einem Kartenaufbau, wie er in dieser Fig. 1 in einer ersten Ausführungsform dargestellt ist. Zwischen einer Deckschicht 1 und einer Trägerschicht 2 sind eine lumineszierende Schicht 5 und eine magnetisierbare Schicht 6 angeordnet. Dabei erstrecken sich die lumineszierende Schicht 5 und die magnetisierbare Schicht 6 vollflächig über die Trägerschicht 2 und berühren sich an einer ebenen Oberfläche 12. Die Deckschicht 1 und/oder die Trägerschicht 2 sind für vorbestimmte Wellenlängen einer Lichtquelle wie nachstehend erläutert transparent oder teiltransparent. Geeignete Materialien für die Deckschicht 1 und/oder die Trägerschicht 2 sind Lacke wie kationisch oder radikalisch härtende UV-Lacke oder physikalisch härtende Lacke, Laminationsfolien, z. B. aus PET, oder PVC, bevorzugt PC, falls notwendig aufgebracht mit Adhäsiven, z. B. der Typen Degalan (Evonik-Degussa) oder Beva (von CTS), wobei auch auf ein Adhäsiv verzichtet werden kann, wie im Fall von PC möglich, oder Transferfolien ("Dünnfilm") auf der Basis der o. g. Lacke, z. B. mit Trägern aus PET oder auch silikonisiertem Papier.

Die lumineszierende Schicht 5 umfasst ein lumineszierendes Material, wie in der vorliegenden Beschreibung erwähnt, z. B. kann ein mit Fluoreszenzdruckfarben oder - lacken, z. B. mit Pigmenten der CRANE Color-Reihe von Krahn Chemie, bedruckter bzw. beschichteter transluzenter Kunststoffträger z. B. aus PC, eingesetzt werden. Eine andere Variante ist das Auftragen des lumineszierenden Materials mit Hilfe eines Giessverfahrens. Als lumineszierendes Material können dabei insbesondere Zinnsulfidderivate, Benzoxazinonderivate, Pyrenderivate oder Pyrazolinderivate, Prophyrine, Stilbene, optischen Aufheller (z, B. Blancophor), Chinine oder Komplexe mit Triazolliganden eingesetzt werden.

Die magnetisierbare Schicht 6 umfasst ein magnetisches oder magnetisierbares Material, wie in der vorliegenden Beschreibung erwähnt. Beispielsweise können rein organische Moleküle, z. b. carbonylgruppenfunktionalsierte kondensierte Aromate oder Heterozyklen, und metallorganischen Moleküle, z. B. mit TCNE Liganden oder Liganden mit mehrkernigen Aromaten eingesetzt werden. Insbesondere kann ein gekapseltes radikalisches Perylenderivat eingesetzt werden, das als physikalisch trocknender Lack auf die innenliegende Seite der Deckfolie aufgebracht oder auf einem Träger aus, z. B. PC aufgebracht wird, wobei auf milde Bedingungen beim Aufbringen der Deckschicht 1 zu achten ist. Eine andere Variante besteht darin, einen Film enthaltend ein gekapseltes radikalisches Perylenderivat auf die Trägerschicht zu giessen und danach nach teilweisem Aushärten, also als noch klebrigen Film, mit einer Deckschicht zu versehen, die sich nach weiterem Aushärten innig mit der Deckschicht 1 oder einer anderen darüber liegenden Schicht, z. B. Schicht 5, verbindet.

Dabei werden die Schichten 5 und 6 entweder durch einen gleichmässigen Auftrag von entsprechenden Materialien auf eine Schicht oder durch die Einarbeitung der entsprechenden Materialien in eine polymere Matrix dieser Schichten erreicht.

Die magnetisierbare Schicht 6 ist angrenzend und auf der lumineszierenden Schicht 5 aufgebracht, wenn man die Deckschicht 1 als "oben" definiert. Es ist genauso möglich die magnetisierbare Schicht 6 unterhalb der lumineszierenden Schicht 5 vorzusehen. Es ist ferner möglich, aber hier nicht dargestellt, dass zwischen den beiden Schichten 5 und 6 eine trennende vorteilhafterweise für sichtbares Licht (bzw. für Wellenlängen von die Anregung beobachtenden Sensoren) transparente Zwischenschicht angeordnet ist.

Die vollflächige Anordnung über die Trägerschicht 2 bedeutet nicht zwangsläufig, dass der gesamte Datenträger vollflächig über die Schichten 5 und 6 verfügt. Es ist genauso möglich, dass die lumineszierende Schicht 5 und die magnetisierbare Schicht 6 in einem (in den Zeichnungen nicht dargestellten) Fenster vorgesehen ist und der Bereich um das Fenster aus für die besagte beeinflussende Lichtstrahlung opak oder undurchsichtig ist. Es kann sich auch sozusagen um ein Teilfenster dahingehend handeln, dass ein Teil der Deckschicht 1 oder ein Teil der Trägerschicht 2 dieses für die Laserstrahlung durchlässige Fenster bilden, während der Rest der Schicht für diese Wellenlängen opak ist.

Eine weitere Ausführungsform eines Datenträgers 10 ist in der Fig. 2 gezeigt, wobei sich die lumineszierende Komponente und die magnetisierbare oder magnetische Komponente gemeinsam in einer magneto-lumineszierenden Schicht 7 befinden. Bei einer für diese Schicht wirksamen Bestrahlung durch die besagte Lichtquelle erfolgt eine Personalisierung an genau der Stelle, wo die Strahlung auftrifft, wobei die Wechselwirkung mit der Lichtstrahlung entweder die lumineszierenden Bestandteile der Schicht 7 oder die magnetischen Bestandteile der Schicht 7 oder beide lumineszierenden und magnetischen Bestandteile der Schicht 7 betrifft. Hierbei ist zu beachten, dass im Falle von magnetisierbaren Komponenten diese zuerst der Magnetisierung unterzogen werden müssen um so die magnetische Komponente zu erzeugen. Die lumineszierende Komponente und/oder die magnetische Komponente der Schicht 7 wird dabei mit Hilfe der Lichtquelle "markiert", indem in Bezug auf die lumineszierende Komponente die "UV-Farbe" (wie in EP 1 322 478 genannt) lokal am Ort des Merkmals vollständig gebleicht wird und indem in Bezug auf die magnetische Komponente die magnetischen Moleküle lokal am Ort des Merkmals vollständig entmagnetisiert werden. Hierdurch lassen sich zum Beispiel Vektorschriften oder Raster Scanning Bilder erzeugen. Weiterhin besteht die Möglichkeit, durch eine Modulation der Lichtleistung ein teilweises Bleichen bzw. Entmagnetisieren zu erreichen und somit farblich gesehen Graustufenbilder und magnetisch gesehen eine geringere Magnetisierung zu generieren.

Statt einem Lichtstrahl, wie er hier erwähnt ist, ist es bei allen Ausführungsbeispielen auch möglich, einen anderen energiereichen Strahl zu verwenden, z.B. einen Laserstrahl oder einen Elektronen- oder Neutronenstrahl, auch Strahlung im UV Bereich oder kurzwelliger oder im IR-Bereich oder langwelliger kann eingesetzt werden, sofern diese die besagte zerstörerische Wirkung auf die Magnetisierbarkeit des Materials, d.h. der Moleküle, oder auf die Lumineszenzeigenschaften des Materials haben.

Die Fig. 3 zeigt eine schematische Draufsicht auf den Datenträger 10 nach den Figs. 1 und 2 nach einer Bestrahlung durch eine Lichtquelle.

Wie in Fig. 3 dargestellt, zeigt sich nach Bestrahlung an den bestrahlten Stellen ein Echtheitsmerkmal 3, 4 als Motiv, hier in Form eines Schriftzugs "genuine", aufgrund der durch die Bestrahlung angeregten lumineszierenden Komponente der lumineszierenden Schicht 5, rsp. der magneto-lumineszierende Schicht 7. An der gleichen Stelle lässt sich in einer die Magnetisierung darstellenden Visualisierung die Personalisierung aufgrund einer Entmagnetisierung der magnetischen Komponente der magnetisierbaren Schicht 6, rsp. der magneto-lumineszierende Schicht 7, als Magnetfeld-freie Zone erkennen, natürlich dann nicht optisch sondern durch einen Magnetfeldsensor erkennbar, der die dann entmagnetisierten Bestandteile des personalisierten Echtheitsmerkmals erkennen kann. Diese sind dann zum Beispiel als Streifencode etc. angeordnet oder werden durch den Sensor in Bildinformation umgewandelt.

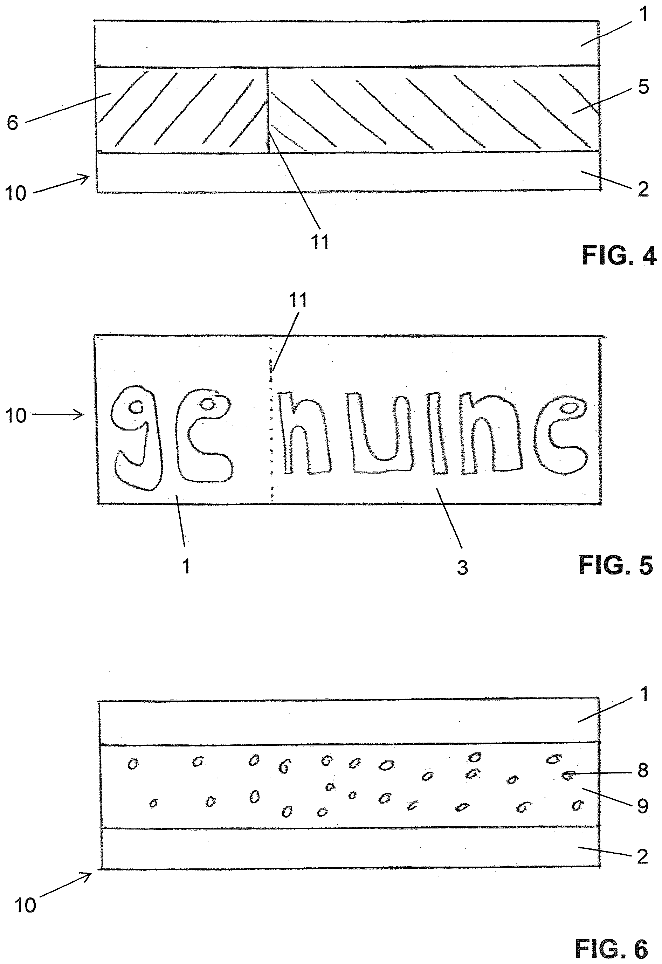

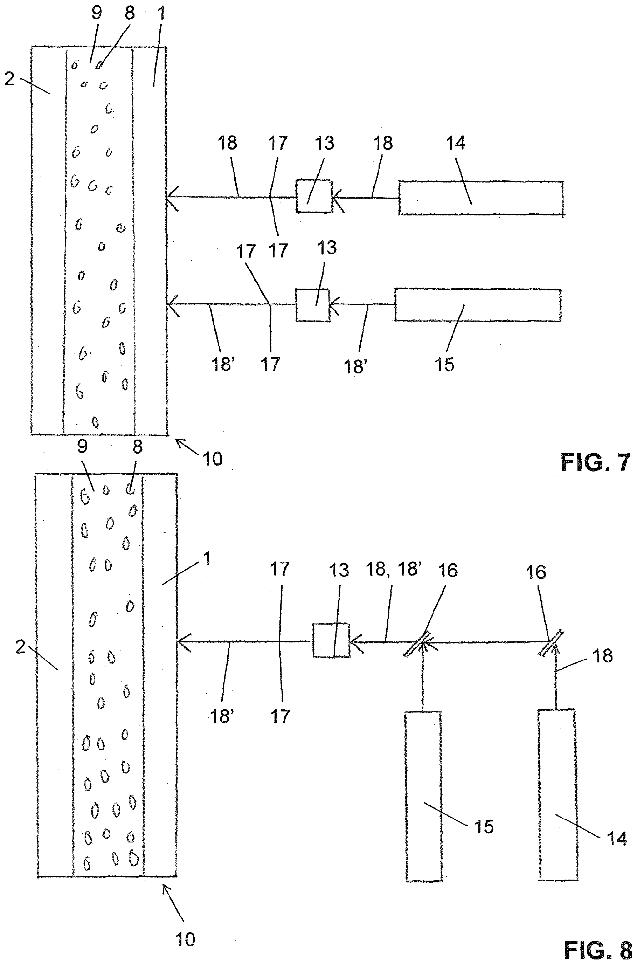

Die Fig. 4 zeigt eine weitere Ausführungsform eines Datenträgers 10 mit zwei sich nicht überlappenden Funktionsschichten 5 und 6, bei welchen die lumineszierende Schicht 5 neben der magnetisierbaren Schicht 6 angeordnet ist, so dass die beiden Schichten 5 und 6 an einer Trennfläche 11 aneinander stossen. Nach einer für beide Schichten 5 und 6 wirksamen Bestrahlung entsteht ein komplementäres Bild bzw. eine komplementäre Personalisierung, wobei der jeweils über der einen der beiden Funktionsschichten liegende Teil der Personalisierung die Funktion dieser Funktionsschicht nicht trägt. Im Beispiel des Schriftzugs "genuine", gezeigt in der Fig. 5, äussert sich das Phänomen als ein fehlendes lokal detektierbares Magnetfeld in der ersten Buchstabenfolge "ge" für das Echtheitsmerkmal 4 sowie in einer fehlenden Lumineszenz in der zweiten Buchstabenfolge "nuine" für das Echtheitsmerkmal 3. Dabei kann es sich um eine einzelne "löschende" Lichtquelle handeln, die sowohl die Lumineszenzfähigkeit in der Schicht 5 löscht als auch die Magnetisierfähigkeit in der Schicht 6 aufhebt; beispielsweise durch ein sequentielles abfahren und abscannen der Oberfläche des Datenträgers 10 über die Schicht 1 oder die Schicht 2. Es können aber auch zwei unterschiedliche Lichtquellen, wie dargestellt in den Figuren 7 und 8, eingesetzt werden, die die für das Ausschalten der einen bzw. der anderen Funktion verantwortlich zeichnen.

In der Fig. 6 ist eine weitere Ausführungsform eines Datenträgers 10 gezeigt, bei welcher die lumineszierende Komponente und die magnetisierbare oder magnetische Komponente Bestandteil einer Verbindung 8 sind, welche sich innerhalb einer molekular-magneto-lumineszierenden Schicht 9 befindet. Der Unterschied zur Schicht 2 der Fig. 2 besteht darin, dass hier ein Molekül in der Schicht 9 eingelagert ist, welches lumineszierend als auch magnetisch aktiv ist und somit in der einen oder der anderen oder in beiden Weisen gelöscht und ausgeschaltet werden kann, so dass es die Fähigkeit zur Lumineszenz und/oder der Magntfeldantwort verliert.

Die Fig. 7 zeigt eine erste Anordnung bei welcher zwei Laser 14, 15 für die Personalisierung eines Datenträgers 10 verwendet werden, wobei dies beispielshaft anhand des Datenträgers 10 gemäss der Figur 6 gezeigt wird. Dabei wird emittierte Laserstrahlung 18 der Wellenlänge λ1 eines ersten Lasers 14 sowie Laserstrahlung 18' der Wellenlänge λ2 eines zweiten Lasers 15 verwendet. Beide Laserstrahlen 18, 18' werden durch einen Scanner 13 gescanned, und treffen alsdann auf den Datenträger 10 auf. Um eine Scanbewegung der Laserstrahlen 18, 18' zu erzeugen kann z. B. ein Galvanoscanner als Scanner 13 verwendet werden, wobei diese Art von Scanner und deren Verwendung dem Fachmann bekannt sind. Je nach Orientierung des Scanners 13 treffen die scannenden Laserstrahlen 18, 18' gemäss einer Bewegungsrichtung 17 auf den Datenträger 10 auf, wobei diese Bewegungsrichtung 17 zu einem Auftreffen der Laserstrahlen 18, 18' auf dem Datenträger 10 in einem 90 Grad Winkel wie hier gezeigt, also entlang der Flächennormalen des Datenträgers 10, oder unter einem versetzten Winkel hier nicht gezeigt erfolgen kann. Die erste Laserstrahlung 18 der Wellenlänge λ1 führt zu einer selektiven Zerstörung der lumineszierenden Komponente des Echtheitsmerkmals, und die zweite Laserstrahlung 18' der Wellenlänge λ2 führt zu einer selektiven Zerstörung der magnetischen Komponente des Echtheitsmerkmals.

Die Fig. 8 zeigt eine zweite Anordnung bei welcher die zwei Laser 14; 15 für die Personalisierung des Datenträgers 10 gemäss der Figur 6 beispielshaft gezeigt wird. In dieser zweiten Anordnung werden die emittierten Lasterstrahlen 18, 18' mit Wellenlänge λ1 und λ2 jeweils an einem optisch reflektierenden Element 16 reflektiert. Das optisch reflektierende Element 16 kann dabei z. B. ein dielektrischer Spiegel oder dielektrisches Reflexionsprisma sein. Solche dielektrische Spiegel oder dielektrische Reflexionsprismen, welche Strahlung bei einer bestimmten Wellenlänge oder eines bestimmten Wellenlängenbereichs reflektieren und ansonsten zumindest teilweise transparent sind, sind dem Fachmann bekannt. Auf diese Weise werden der erste Laserstrahl 18 und der zweite Laserstrahl 18', die räumlich getrennt voneinander erzeugt werden, auf ein und denselben Scanner 13 geführt. Nach dem reflektierenden Element 16 verlaufen die beiden Laserstrahlen 18, 18' vorzugsweise entlang einer Bewegungsrichtung 17, wobei diese Bewegungsrichtung 17 zu einem Auftreffen der Laserstrahlen 18, 18' auf dem Datenträger 10 in einem 90 Grad Winkel wie hier gezeigt, also entlang der Flächennormalen des Datenträgers 10, oder unter einem versetzten Winkel hier nicht gezeigt erfolgen kann.

Auch bei dieser zweiten Anordnung führt die erste Laserstrahlung 18 der Wellenlänge λ1 zu einer selektiven Zerstörung der lumineszierenden Komponente des Echtheitsmerkmals, und die zweite Laserstrahlung 18' der Wellenlänge λ2 zu einer selektiven Zerstörung der magnetischen Komponente des Echtheitsmerkmals.

Sowohl bei der ersten Anordnung gezeigt in der Figur 7 wie auch bei der zweiten Anordnung gezeigt in der Figur 8 ist die Verwendung der zwei Laser14; 15 nicht auf die Personalisierung eines Datenträgers 10 gemäss der Figur 6 beschränkt, sondern kann allgemein für das gleichzeitige oder sequentielle Löschen der lumineszierenden Komponenten und für die Entmagnetisierung der magnetischen Komponenten verwendet werden.

### BEZUGSZEICHENLISTE

- 1: Deckschicht
- 2: Trägerschicht
- 3: lumineszierendes Echtheitsmerkmal
- 4: magnetisierbares oder magnetisches Echtheitsmerkmal
- 5: lumineszierende Schicht
- 6: magnetisierbare Schicht
- 7: magneto-lumineszierende Schicht
- 8: Verbindung
- 9: molekular-magneto-lumineszierende Schicht
- 10: Datenträger
- 11: Trennfläche
- 12: Kontaktoberfläche
- 13: Scanner
- 14: erster Laser
- 15: zweiter Laser
- 16: optisch reflektierendes Element
- 17: Bewegungsrichtung des scannenden Laserstrahls
- 18,18': Laserstrahl

## Patentansprüche

1. Datenträger jeglicher Art, insbesondere Kunststoffkarte, mit in dem Datenträger (1; 2) vorgesehenen Echtheitsmerkmalen (4), die bei Bestrahlung mit einem energiereichen Strahl, z.B. einem Laserstrahl oder einem Elektronen- oder Neutronenstrahl, durch Veränderung von physikalischen und/oder chemischen Eigenschaften personalisierbar sind, wobei
- die personalisierbaren Echtheitsmerkmale (4) aus mindestens einer magnetisierbaren Komponente bestehen,
- die personalisierbaren Echtheitsmerkmale (4) magnetisch ausgebildet sind,
- die Intensität und/oder Wellenlänge des energiereichen Strahls so gewählt ist, dass die personalisierbaren magnetischen Echtheitsmerkmale (4) bei einer Bestrahlung eine lokale Strukturänderung erfahren, und
- durch die lokale Strukturänderung die magnetisierbare Komponente der personalisierbaren magnetischen Echtheitsmerkmale (4) mindestens teilweise zerstört wird, so dass die personalisierten magnetischen Echtheitsmerkmale (4) nach der Bestrahlung einen im Magnetfeld verminderten oder Magnetfeld-freien Bereich im Gesamtbild bilden, **dadurch gekennzeichnet,**
**dass** zweite in dem Datenträger (1; 2) vorgesehene Echtheitsmerkmale (3) vorgesehen sind, die bei Bestrahlung mit dem besagten oder einem weiteren energiereichen Strahl, z.B einem Laserstrahl oder einem Elektronen- oder Neutronenstrahl, personalisierbar sind, dass die zweiten personalisierbaren Echtheitsmerkmale (3) aus mindestens einer farbaktiven Komponente bestehen, dass die zweiten personalisierbaren Echtheitsmerkmale (3) lumineszierend ausgebildet sind, wobei die Intensität und/oder Wellenlänge des Strahls so gewählt ist, dass die personalisierbaren lumineszierenden Echtheitsmerkmale (3) bei einer Bestrahlung eine lokale Strukturänderung erfahren, und dass durch die lokale Strukturänderung die farbaktive Komponente der personalisierbaren lumineszierenden Echtheitsmerkmale (3) mindestens teilweise zerstört wird, so dass die personalisierten lumineszierenden Echtheitsmerkmale (3) bei Bestrahlung nicht mit den nicht-personalisierten lumineszierenden Echtheitsmerkmalen aufleuchten und damit ein Negativbild in einem aufleuchtenden Gesamtbild bzw. ein negatives Lumineszenz-Bild sichtbar wird.

2. Datenträger nach Anspruch 1, **dadurch gekennzeichnet, dass** sich die farbaktive Komponente in und / oder auf mindestens einer lumineszierenden Schicht (5) und dass die magnetisierbare oder magnetische Komponente in und / oder auf mindestens einer magnetisierbaren Schicht (6) befinden.

3. Datenträger nach einem der Ansprüche 1 oder 2, **dadurch gekennzeichnet, dass** die magnetisierbare Schicht (6) und die lumineszierende Schicht (5) nebeneinander angeordnet sind, oder dass die magnetisierbare Schicht (6) und die lumineszierende Schicht (5) übereinander angeordnet sind, wobei diejenige Schicht, die in Richtung des einfallenden Strahls angeordnet ist, und als erste Schicht vom Strahl bestrahlt wird, transluzent für den verwendeten Strahl ist, der in der anderen Schicht die Echtheitsmerkmale (3 oder 4) beeinflusst, insbesondere teilweise zerstört.

4. Datenträger nach einem der Ansprüche 1 bis 2, **dadurch gekennzeichnet, dass** sich die lumineszierende Komponente und die magnetisierbare oder magnetische Komponente gemeinsam innerhalb und / oder gemeinsam auf mindestens einer magneto-lumineszierenden Schicht (7) befinden.

5. Datenträger nach Anspruch 1, **dadurch gekennzeichnet, dass** die lumineszierende Komponente und die magnetisierbare oder magnetische Komponente Bestandteile einer Verbindung (8) sind und sich diese Verbindung (8) in und / oder auf mindestens einer molekular-magneto-lumineszierenden Schicht (9) befinden.

6. Datenträger nach einem der Ansprüche 1 bis 5, **dadurch gekennzeichnet, dass** der Datenträger eine oder mehrere Zusatzschichten aufweist, wobei diese eine oder mehrere Zusatzschichten als Schutzschicht ausgebildet sind und/oder weitere Zusatzsubstanzen enthalten, welche sich beim Bestrahlen verfärben.

7. Datenträger nach einem der Ansprüche 1 bis 6, **dadurch gekennzeichnet, dass** sich die magnetisierbare Schicht (6) und / oder die lumineszierende Schicht (5) und / oder die magneto-lumineszierende Schicht (7) und / oder die molekular-magneto-lumineszierende Schicht (9) und / oder die Zusatzschicht vollflächig über den Datenträger erstrecken.

8. Datenträger nach einem der Ansprüche 1 bis 7, **dadurch gekennzeichnet, dass** die mindestens teilweise Zerstörung der farbaktiven Komponente und der magnetisierbaren Komponente der personalisierbaren Echtheitsmerkmale (3; 4) durch eine Bestrahlung derselben Art, insbesondere durch eine einzige Strahlungsquelle, insbesondere einen Laser, erfolgt, oder dass die mindestens teilweise Zerstörung der farbaktiven Komponente und der magnetisierbaren Komponente der personalisierbaren Echtheitsmerkmale (3; 4) durch mindestens zwei Sorten einer Bestrahlung, insbesondere durch zwei getrennte Strahlungsquellen erfolgt.

9. Datenträger nach einem der Ansprüche 1 bis 8, **dadurch gekennzeichnet, dass** die personalisierten Echtheitsmerkmale (3; 4) unter Einwirkung von elektromagnetischer Strahlung und / oder von Korpuskelstrahlung zum Aufleuchten gebracht und entmagnetisiert werden können und / oder durch Photolumineszenz und/oder Chemolumineszenz und/oder Biolumineszenz bewirkbar sind, und / oder dass Aufleuchten im sichtbaren und / oder im nicht-sichtbaren Spektralbereich erfolgen kann.

10. Datenträger nach einem der Ansprüche 1 bis 9, **dadurch gekennzeichnet, dass** der Datenträger eine Deckschicht (1) und eine Trägerschicht (2) aufweist, wobei die Deckschicht (1) auf der der Bestrahlung zugewandten Seite des Datenträgers angeordnet ist, und welche gegenüber dem verwendeten Strahl transluzent ist.

11. Datenträger nach einem der Ansprüche 1 bis 10, **dadurch gekennzeichnet, dass** die lumineszierende Substanz der personalisierbaren Echtheitsmerkmale (3; 4) zu den Stoffklassen der Zinnsulfidderivate, Benzoxazinonderivate, Pyrenderivate oder Pyrazolinderivate gehört, und / oder dass die magnetisierbare Substanz der personalisierbaren Echtheitsmerkmale (3; 4) zu den Stoffklassen der metallorganischen Komplexe gehört oder eine organische Verbindung mit resonanzstabilisierter und / oder durch sterische Effekte stabilisierte radikaltragende Funktion ist und / oder dass die Verbindung (8) der personalisierbaren Echtheitsmerkmale (3; 4) zu den Molekülklassen der polyzyklischen Verbindungen, aromatischen Verbindungen oder konjugierte Verbindungen gehört, und / oder dass die magnetisierbare Substanz eine Curie-Temperatur oberhalb der Raumtemperatur besitzt.

12. Datenträger jeglicher Art, insbesondere Kunststoffkarte, mit in dem Datenträger (1; 2) vorgesehenen Echtheitsmerkmalen (4), die bei Bestrahlung mit einem energiereichen Strahl, z.B. einem Laserstrahl oder einem Elektronen- oder Neutronenstrahl, durch Veränderung von physikalischen und/oder chemischen Eigenschaften personalisierbar sind, wobei
- die personalisierbaren Echtheitsmerkmale (4) aus mindestens einer magnetisierbaren Komponente bestehen,
- die personalisierbaren Echtheitsmerkmale (4) magnetisch ausgebildet sind,
- die Intensität und/oder Wellenlänge des energiereichen Strahls so gewählt ist, dass die personalisierbaren magnetischen Echtheitsmerkmale (4) bei einer Bestrahlung eine lokale Strukturänderung erfahren, und
- durch die lokale Strukturänderung die magnetisierbare Komponente der personalisierbaren magnetischen Echtheitsmerkmale (4) mindestens teilweise zerstört wird, so dass die personalisierten magnetischen Echtheitsmerkmale (4) nach der Bestrahlung einen im Magnetfeld verminderten oder Magnetfeld-freien Bereich im Gesamtbild bilden, wobei die magnetisierbare Komponente in einem externen Magnetfeld eine vom externen Magnetfeld unabhängige eigene Magnetisierung aufweist, wobei die magnetisierbare Komponente durch das externe Magnetfeld magnetisiert wird,
wobei sich die eigene Magnetisierung der magnetisierbaren Komponente parallel zum externen Magnetfeld ausrichtet,
wobei die magnetisierte Komponente danach magnetisch ist, und
wobei die personalisierbaren magnetischen Echtheitsmerkmale danach personalisierte magnetische Echtheitsmerkmale sind, **dadurch gekennzeichnet, dass** nach der Bestrahlung mit einem energiereichen Strahl die personalisierten magnetischen Echtheitsmerkmale am Ort der Bestrahlung weder magnetisch noch magnetisierbar sind. und einen Magnetfeld verminderten oder Magnetfeld-freien Bereich am Ort der Bestrahlung bilden.

13. Datenträger nach Anspruch 12, **dadurch gekennzeichnet, dass** der Magnetfeld verminderte oder Magnetfeld-freie Bereich der personalisierten magnetischen Echtheitsmerkmale bei Betrachtung durch ein geeignetes Nachweisgerät nicht detektiert und / oder visualisiert werden, während Bereiche der personalisierten magnetischen Echtheitsmerkmale, die keiner Bestrahlung mit einem energiereichen Strahl ausgesetzt wurden, magnetische Bereiche aufweisen die durch das geeignete Nachweisgerät detektiert und / oder visualisiert werden.

14. Datenträger nach Anspruch12 oder 13, **dadurch gekennzeichnet, dass** die lumineszierende Komponente und die magnetisierbare oder magnetische Komponente Bestandteile einer Verbindung (8) sind und sich diese Verbindung (8) in und / oder auf mindestens einer molekular-magneto-lumineszierenden Schicht (9) befinden, und dass die Verbindung eine molekulare Verbindung ist, wobei die magnetisierbare Komponente und die farbaktive Komponente Bestandteile der molekularen Verbindung sind,
wobei die molekulare Verbindung sowohl lumineszierend als auch magnetisierbar ist,
wobei die magnetisierbare Komponente der molekularen Verbindung durch das externe Magnetfeld magnetisiert wird und danach magnetisch ist, und
wobei durch eine Bestrahlung sowohl der lumineszierende Bestandteil wie auch der magnetische Bestandteil der molekularen Verbindung mindestens teilweise zerstört werden.

15. Datenträger nach Anspruch 14, **dadurch gekennzeichnet, dass** durch die mindestens teilweise Zerstörung des lumineszierenden Bestandteils der molekularen Verbindung dieser Bereich der Echtheitsmerkmale bei Bestrahlung durch das geeignete Nachweisegerät nicht aufleuchtet während die nicht bestrahlten Bereiche bei Bestrahlung durch das Nachweisgerät aufleuchten, und dass durch die mindestens teilweise Zerstörung des magnetischen Bestandteils der molekularen Verbindung dieser Bereich der Echtheitsmerkmale bei Betrachtung durch ein geeignetes Nachweisgerät nicht detektiert und / oder visualisiert wird während die nicht bestrahlten Bereiche magnetische Bereiche sind die durch das Nachweisgerät detektiert und / oder visualisiert werden.

## Claims

1. A data carrier of any kind, in particular a plastic card, with authenticity features (4) provided in said data carrier (1, 2), which on irradiation with a high-energy beam, e.g. a laser beam or an electron or neutron beam, are personalizable by means of changes in physical and/or chemical properties, wherein
- the personalizable authenticity features (4) are composed of at least one magnetizable component,
- the personalizable authenticity features (4) are magnetically configured,
- the intensity and/or wavelength of the energy-rich beam is selected such that the personalizable magnetic authenticity features (4) undergo a local structural change on irradiation, and
- the magnetizable component of the personalizable magnetic authenticity features (4) is at least partially destroyed by the local structural change, so that the personalized magnetic authenticity features (4) form an area of lesser or no magnetic field in the overall image after irradiation,
**characterized in that**
- second authenticity features (3) are provided in the data carrier (1, 2), which on irradiation with the said or a further energy-rich beam, e.g. a laser beam or an electron or neutron beam, are personalizable, **in that** the second personalizable authenticity features (3) are composed of at least one color-active component, the second personalizable authenticity features (3) are configured to be luminescent, wherein the intensity and/or wavelength of the beam is selected such that the personalizable luminescent authenticity features (3) undergo a local structural change on irradiation, and **in that** the color-active component of the personalizable luminescent authenticity features (3) is at least partially destroyed by the local structural change, so that the personalized luminescent authenticity features (3) do not luminesce on irradiation together with the non-personalized luminescent authenticity features, thus causing a negative image in the overall luminescent image or a negative luminescent image to become visible.

2. The data carrier as claimed in claim 1, **characterized in that** the color-active component is located in and/or on at least one luminescent layer (5) and the magnetizable or magnetic component is located in and/or on at least one magnetizable layer (6).

3. The data carrier as claimed in one of claims 1 or 2, **characterized in that** the magnetizable layer (6) and the luminescent layer (5) are arranged adjacent to each other or the magnetizable layer (6) and the luminescent layer (5) are arranged one on top of the other, wherein the layer that is arranged in the direction of the incident beam and is irradiated as the first layer by the beam is translucent to the beam used, which in the other layer influences the authenticity features (3 or 4), and in particular partially destroys them.

4. The data carrier as claimed in one of claims 1 to 2, **characterized in that** the luminescent component and the magnetizable or magnetic component are located together within and/or on at least one magnetoluminescent layer (7).

5. The data carrier as claimed in claim 1, **characterized in that** the luminescent component and the magnetizable or magnetic component are constituents of a compound (8) and **in that** this compound (8) is located in and/or on at least one molecular magnetoluminescent layer (9).

6. The data carrier as claimed in one of claims 1 to 5, **characterized in that** the data carrier has one or a plurality of additional layers, wherein this one or a plurality of additional layers are formed as a protective layer and/or contain further additive substances that change color on irradiation.

7. The data carrier as claimed in one of claims 1 to 6, **characterized in that** the magnetizable layer (6) and/or the luminescent layer (5) and/or the magnetoluminescent layer (7) and/or the molecular magnetoluminescent layer (9) and/or the additional layer extend over the entire data carrier.

8. The data carrier as claimed in one of claims 1 to 7, **characterized in that** the at least partial destruction of the color-active component and the magnetizable component of the personalizable authenticity features (3, 4) is carried out by irradiation of the same type, in particular by a single radiation source, in particular a laser, or **in that** the at least partial destruction of the color-active component and the magnetizable component of the personalizable authenticity features (3, 4) is carried out by at least two types of irradiation, in particular by two separate radiation sources.

9. The data carrier as claimed in of claims 1 to 8, **characterized in that** the personalized authenticity features (3, 4) can be caused to luminesce and be demagnetized under the effect of electromagnetic radiation and/or by corpuscular radiation and/or is effectible by photoluminescence and/or by chemoluminescence and/or by bioluminescence, and/or luminescence can occur in the visible and/or the non-visible spectral range.

10. The data carrier as claimed in one of claims 1 to 9, **characterized in that** the data carrier has a covering layer (1) and a carrier layer (2), wherein the covering layer (1) is arranged on the side of the data carrier facing toward the irradiation and is translucent to the beam used.

11. The data carrier as claimed in one of claims 1 to 10, **characterized in that** the luminescent substance of the personalizable authenticity features (3, 4) belongs to the substance group of the tin sulfide derivatives, benzoxazinone derivatives, pyrene derivatives or pyrazoline derivatives, and/or the magnetizable substance of the personalizable authenticity features (3, 4) belongs to the substance group of the organometallic complexes or is an organic compound with a radical bearing functional group that is stabilized by resonance and/or steric effects, and/or the compound (8) of the personalizable authenticity features (3, 4) belongs to the molecule classes of the polycyclic compounds, aromatic compounds, or conjugated compounds, and/or the magnetizable substance has a Curie temperature above room temperature.

12. A data carrier of any kind, in particular a plastic card, with authenticity features (4) provided in said data carrier (1, 2), which on irradiation with a high-energy beam, e.g. a laser beam or an electron or neutron beam, are personalizable by means of changes in physical and/or chemical properties, wherein
- the personalizable authenticity features (4) are composed of at least one magnetizable component,
- the personalizable authenticity features (4) are magnetically configured,
- the intensity and/or wavelength of the energy-rich beam is selected such that the personalizable magnetic authenticity features (4) undergo a local structural change on irradiation, and
- the magnetizable component of the personalizable magnetic authenticity features (4) is at least partially destroyed by the local structural change, so that the personalized magnetic authenticity features (4) form an area of lesser or no magnetic field in the overall image after irradiation, wherein the magnetizable component in an external magnetic field shows inherent magnetization independently of said external magnetic field, wherein the magnetizable component is magnetized by the external magnetic field, wherein the inherent magnetization of the magnetizable component is oriented parallel to the external magnetic field,
wherein the magnetized component is then magnetized, and
wherein the personalizable magnetic authenticity features then constitute personalized magnetic authenticity features, **characterized in that** after irradiation with a high-energy beam, the personalized magnetic authenticity features are neither magnetic nor magnetizable at the irradiation site and form an area of lesser or no magnetic field at the irradiation site.

13. The data carrier as claimed in claim 12, **characterized in that** the area of lesser or no magnetic field of the personalized magnetic authenticity features are not detected and/or visualized on observation by a suitable detection device, while areas of the personalized magnetic authenticity features that were not exposed to irradiation with a high-energy beam show magnetic areas that are detected and/or visualized by the suitable detection device.

14. The data carrier as claimed in claim 12 or 13, **characterized in that** that the luminescent component and the magnetizable or magnetic component are constituents of a compound (8) and **in that** this compound (8) is located in and/or on at least one molecular magnetoluminescent layer (9), and **in that** the compound is a molecular compound, wherein the magnetizable component and the color-active component are constituents of the molecular compound,
wherein the molecular compound is both luminescent and magnetizable,
wherein the magnetizable component of the molecular compound is magnetized by the external magnetic field and is then magnetized, and
wherein both the luminescent component and the magnetic component of the molecular compound are at least partially destroyed by irradiation.

15. The data carrier as claimed in claim 14, **characterized in that**, because of the at least partial destruction of the luminescent component of the molecular compound, this area of the authenticity features does not luminesce on irradiation by the suitable detection device, while the non-irradiated areas luminesce on irradiation by the detection device, and **in that**, because of the at least partial destruction of the magnetic component of the molecular compound, this area of the authenticity features is not detected and/or visualized on observation by a suitable detection device, while the non-irradiated areas are magnetic areas that are detected and/or visualized by the detection device.

## Revendications

1. Support de données de tout type, en particulier carte en plastique, avec des éléments d'authenticité (4) prévues dans ledit support de données (1, 2), qui, lors d'une irradiation par un faisceau de haute énergie, par exemple un faisceau laser ou un faisceau d'électrons ou de neutrons, sont personnalisables au moyen de modifications des propriétés physiques et/ou chimiques, dans lequel
- les éléments d'authenticité personnalisables (4) sont composés d'au moins un composant magnétisable,
- les éléments d'authenticité personnalisables (4) sont configurées de manière magnétique,
- l'intensité et/ou la longueur d'onde du faisceau riche en énergie est choisie de telle sorte que les éléments d'authenticité magnétique personnalisables (4) subissent un changement structurel local lors de l'irradiation, et
- le composant magnétisable des éléments d'authenticité magnétique personnalisables (4) est au moins partiellement détruit par le changement structurel local, de sorte que les éléments d'authenticité magnétique personnalisés (4) forment une zone de champ magnétique moindre ou nul dans l'image globale après irradiation,
**caractérisé en ce que**
- des seconds éléments d'authenticité (3) sont prévus dans le support de données (1, 2), qui lors de l'irradiation avec ledit ou un autre faisceau riche en énergie, par exemple un faisceau laser ou un faisceau d'électrons ou de neutrons, sont personnalisables, **en ce que** les secondes éléments d'authenticité personnalisables (3) sont composées d'au moins un composant à colorant actif, les secondes éléments d'authenticité personnalisables (3) sont configurées de manière à être luminescentes, l'intensité et/ou la longueur d'onde du faisceau étant choisies de manière à ce que les éléments d'authenticité luminescentes personnalisables (3) subissent un changement structurel local lors de l'irradiation, et **en ce que** le composant à colorant actif des éléments d'authenticité luminescents personnalisables (3) est au moins partiellement détruit par le changement structurel local, de sorte que les éléments d'authenticité luminescents personnalisés (3) ne s'illuminent pas sous l'effet de l'irradiation en même temps que les éléments d'authenticité luminescents non personnalisés, ce qui entraîne une image négative dans l'image luminescente globale ou une image luminescente négative qui devient visible.

2. Support de données selon la revendication 1, **caractérisé en ce que** le composant à colorant actif est situé dans et/ou sur au moins une couche luminescente (5) et le composant magnétisable ou magnétique est situé dans et/ou sur au moins une couche magnétisable (6).

3. Support de données selon l'une des revendications 1 ou 2, **caractérisé en ce que** la couche magnétisable (6) et la couche luminescente (5) sont disposées l'une à côté de l'autre ou la couche magnétisable (6) et la couche luminescente (5) sont disposées l'une au-dessus de l'autre, la couche disposée dans la direction du faisceau incident et irradiée en tant que première couche par le faisceau étant translucide pour le faisceau utilisé, qui dans l'autre couche influence les éléments d'authenticité (3 ou 4), et notamment les détruit partiellement.

4. Support de données selon l'une des revendications 1 à 2, **caractérisé en ce que** le composant luminescent et le composant magnétisable ou magnétique sont situés ensemble dans et/ou sur au moins une couche magnétoluminescente (7).

5. Support de données selon la revendication 1, **caractérisé en ce que** le composant luminescent et le composant magnétisable ou magnétique sont des constituants d'un composé (8) et **en ce que** ce composé (8) est situé dans et/ou sur au moins une couche magnétoluminescente moléculaire (9).

6. Support de données selon l'une des revendications 1 à 5, **caractérisé en ce que** le support de données présente une ou plusieurs couches supplémentaires, cette ou ces couches supplémentaires étant formées en tant que couche de protection et/ou contenant d'autres substances additives qui changent de couleur sous l'effet de l'irradiation.

7. Support de données selon l'une des revendications 1 à 6, **caractérisé en ce que** la couche magnétisable (6) et/ou la couche luminescente (5) et/ou la couche magnétoluminescente (7) et/ou la couche magnétoluminescente moléculaire (9) et/ou la couche supplémentaire s'étendent sur la totalité du support de données.

8. Support de données selon l'une des revendications 1 à 7, **caractérisé en ce que** la destruction au moins partielle du composant à colorant actif et du composant magnétisable des éléments d'authenticité personnalisables (3, 4) est réalisée par irradiation du même type, en particulier par une seule source de rayonnement, en particulier un laser, ou **en ce que** la destruction au moins partielle du composant à colorant actif et du composant magnétisable des éléments d'authenticité personnalisables (3, 4) est réalisée par au moins deux types d'irradiation, en particulier par deux sources de rayonnement séparées.

9. Support de données selon les revendications 1 à 8, **caractérisé en ce que** les éléments d'authenticité personnalisables (3, 4) peuvent être luminescents et démagnétisés sous l'effet d'un rayonnement électromagnétique et/ou d'un rayonnement corpusculaire et/ou sont efficaces par photoluminescence et/ou par chimioluminescence et/ou par bioluminescence, et/ou la luminescence peut se produire dans le domaine spectral visible et/ou non visible.

10. Support de données selon l'une des revendications 1 à 9, **caractérisé en ce que** le support de données présente une couche de recouvrement (1) et une couche de support (2), la couche de recouvrement (1) étant disposée sur le côté du support de données tourné vers l'irradiation et étant translucide pour le faisceau utilisé.

11. Support de données selon l'une des revendications 1 à 10, **caractérisé en ce que** la substance luminescente des éléments d'authenticité personnalisables (3, 4) appartient au groupe de substances des dérivés du sulfure d'étain, des dérivés de la benzoxazinone, des dérivés du pyrène ou des dérivés de la pyrazoline, et/ou la substance magnétisable des éléments d'authenticité personnalisables (3, 4) appartient au groupe de substances des complexes organométalliques ou est un composé organique avec un groupe fonctionnel porteur de radicaux qui est stabilisé par résonance et/ou effets stériques, et/ou le composé (8) des éléments d'authenticité personnalisables (3, 4) appartient aux classes de molécules des composés polycycliques, des composés aromatiques ou des composés conjugués, et/ou la substance magnétisable a une température de Curie supérieure à la température ambiante.

12. Support de données de tout type, en particulier une carte en plastique, avec des éléments d'authenticité (4) prévues dans ledit support de données (1, 2), qui, lors d'une irradiation par un faisceau à haute énergie, par exemple un faisceau laser ou un faisceau d'électrons ou de neutrons, sont personnalisables au moyen de modifications des propriétés physiques et/ou chimiques, dans lequel
- les éléments d'authenticité personnalisables (4) sont composés d'au moins un composant magnétisable,
- les éléments d'authenticité personnalisables (4) sont configurées de manière magnétique,
- l'intensité et/ou la longueur d'onde du faisceau riche en énergie est choisie de telle sorte que les éléments d'authenticité magnétique personnalisables (4) subissent un changement structurel local lors de l'irradiation, et
- le composant magnétisable des éléments d'authenticité magnétique personnalisables (4) est au moins partiellement détruite par le changement structurel local, de sorte que les éléments d'authenticité magnétique personnalisables (4) forment une zone de champ magnétique moindre ou nul dans l'image globale après irradiation, dans lequel le composant magnétisable dans un champ magnétique externe présente une magnétisation inhérente indépendamment dudit champ magnétique externe, dans lequel le composant magnétisable est magnétisé par le champ magnétique externe,
dans lequel l'aimantation inhérente du composant magnétisable est orientée parallèlement au champ magnétique externe,
dans lequel le composant magnétisé est ensuite magnétisé, et
dans lequel les éléments d'authenticité magnétique personnalisables constituent alors des éléments d'authenticité magnétique personnalisés,
**caractérisé en ce qu'**après l'irradiation avec un faisceau de haute énergie, les éléments d'authenticité magnétique personnalisés ne sont ni magnétiques ni magnétisables sur le site d'irradiation et forment une zone de champ magnétique moindre ou nulle sur le site d'irradiation.

13. Support de données selon la revendication 12, **caractérisé en ce que** la zone de champ magnétique moindre ou nulle des éléments d'authenticité magnétique personnalisés n'est pas détectée et/ou visualisée lors de l'observation par un dispositif de détection approprié, tandis que les zones des éléments d'authenticité magnétique personnalisés qui n'ont pas été exposées à l'irradiation par un faisceau de haute énergie présentent des zones magnétiques qui sont détectées et/ou visualisées par le dispositif de détection approprié.

14. Support de données selon la revendication 12 ou 13, **caractérisé en ce que** le composant luminescent et le composant magnétisable ou magnétique sont des constituants d'un composé (8) et **en ce que** ce composé (8) est situé dans et/ou sur au moins une couche moléculaire magnétoluminescente (9), et **en ce que** le composé est un composé moléculaire, le composant magnétisable et le composant à colorant actif étant des constituants du composé moléculaire,
dans lequel le composé moléculaire est à la fois luminescent et magnétisable,
dans lequel le composant magnétisable du composé moléculaire est magnétisé par le champ magnétique externe et est ensuite magnétisé, et
dans lequel le composant luminescent et le composant magnétique du composé moléculaire sont tous deux au moins partiellement détruits par l'irradiation.

15. Support de données selon la revendication 14, **caractérisé en ce que**, en raison de la destruction au moins partielle du composant luminescent du composé moléculaire, cette zone des éléments d'authenticité ne brille pas lors de l'irradiation par le dispositif de détection approprié, tandis que les zones non irradiées brillent lors de l'irradiation par le dispositif de détection, et **en ce que**, en raison de la destruction au moins partielle du composant magnétique du composé moléculaire, cette zone des éléments d'authenticité n'est pas détectée et/ou visualisée lors de l'observation par un dispositif de détection approprié, tandis que les zones non irradiées sont des zones magnétiques qui sont détectées et/ou visualisées par le dispositif de détection.
